(19) Europäisches Patentamt / European Patent Office / Office européen des brevets

(11) **EP 4 446 376 A1**

(12) **EUROPEAN PATENT APPLICATION**
published in accordance with Art. 153(4) EPC

(43) Date of publication:
**16.10.2024 Bulletin 2024/42**

(21) Application number: **23737485.5**

(22) Date of filing: **10.01.2023**

(51) International Patent Classification (IPC):
***C08K 5/053*** $^{(2006.01)}$ ***C08K 5/09*** $^{(2006.01)}$
***C08K 5/07*** $^{(2006.01)}$ ***C08K 3/22*** $^{(2006.01)}$
***C08L 83/04*** $^{(2006.01)}$ ***C08G 77/20*** $^{(2006.01)}$
***C08G 77/12*** $^{(2006.01)}$ ***C08G 77/18*** $^{(2006.01)}$

(52) Cooperative Patent Classification (CPC):
**C08G 77/12; C08G 77/18; C08G 77/20; C08K 3/22; C08K 5/053; C08K 5/07; C08K 5/09; C08L 83/04**

(86) International application number:
**PCT/KR2023/000444**

(87) International publication number:
**WO 2023/132737 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2022 KR 20220003582**

(71) Applicant: **LG Chem, Ltd.**
**Yeongdeungpo-gu**
**Seoul 07336 (KR)**

(72) Inventors:
- **LEE, Hong Chan**
  **Daejeon 34122 (KR)**
- **LEE, Seung Min**
  **Daejeon 34122 (KR)**
- **JUNG, Jin Mi**
  **Daejeon 34122 (KR)**

(74) Representative: **Hoffmann Eitle**
**Patent- und Rechtsanwälte PartmbB**
**Arabellastraße 30**
**81925 München (DE)**

(54) **CURABLE COMPOSITION**

(57) A curable composition and a use thereof. The curable composition can be applied to a product or an element that generates heat during driving, storage and/or maintenance, or has possibilities of ignition or explosion, capable of effectively responding to the heat, ignition, and explosion. For example, the composition is applied to an article comprising a plurality of products or elements as described above, thereby being capable of responding to abnormal heat generation, explosion, and ignition occurring in any one element or product, and preventing or minimizing propagation of such heat generation, explosion, and ignition to other adjacent elements or products. Also, the curable composition provides excellent handling properties, storage stability and flame retardancy. In addition, the curable composition or the cured product can stably maintain the above characteristics for a long period of time while achieving the above characteristics by using a non-capsulated phase change material.

[Figure 3]

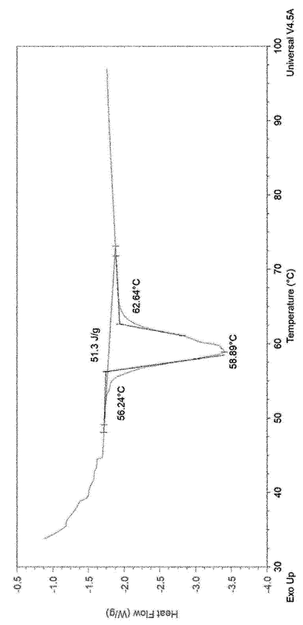


EP 4 446 376 A1

## Description

### Technical Field

This application claims the benefit of priority based on Korean Patent Application No. 10-2022-0003582 dated January 10, 2022, the disclosure of which is incorporated herein by reference in its entirety.
The present application relates to a curable composition and a use thereof.

### Background Art

The importance of technology to treat the heat generated by products increases, but it is not easy to properly manage heat according to the heating aspects of related products.
For example, a device such as a battery module or a battery pack comprises a plurality of battery cells or a plurality of battery modules, which are positioned relatively adjacent to each other. In such a device, it is necessary to keep the temperature of a plurality of components as constant as possible in a normal state, and it is necessary to prevent abnormal heat generation, ignition and/or explosion occurring in any one component from affecting other components as much as possible, but this control is very difficult because the components are in close proximity.
In order to manage heat generated from components, a technology for absorbing heat due to abnormal heat generation by applying a so-called phase change material (PCM) is known (for example, Patent Document 1).
However, since the form of absorbing heat is also different depending on the type of phase change material, it is a difficult problem to absorb only the heat caused by abnormal heat generation without disturbing the required heat absorbing characteristics of the applied product, that is, the normal state of the applied product.
Also, usually, when the phase change material absorbs heat, it is often phase-changed into a liquid phase, so that since the phase change material is lost in a process of using, it is a very difficult problem to stably maintain endothermic properties for a long period of time. In order to solve such a problem, a technique for encapsulating a phase change material to prevent leakage even when the phase transitions to a liquid phase is also known.
However, an additional process is required to encapsulate the phase change material.
In addition, since the properties of the phase change material are changed by encapsulation, it is a very difficult problem to precisely match the endothermic properties required according to the product using the encapsulated phase change material.

[Prior Art Documents]

[Patent Documents]

(Patent Document 1) Korean Laid-Open Patent Publication No. 10-2020-0135105

### Disclosure

### Technical Problem

The present application relates to a curable composition and a use thereof. The present application is intended to provide a curable composition, which is applied to a product or an element that generates heat during driving, storage and/or maintenance, or has possibilities of ignition or explosion, capable of effectively responding to the heat, ignition, and explosion. For example, the composition of the present application is applied to an article comprising a plurality of products or elements as described above, thereby being capable of responding to abnormal heat generation, explosion, and ignition occurring in any one element or product, and preventing or minimizing propagation of such heat generation, explosion, and ignition to other adjacent elements or products. Also, it is one object of the present application to provide the curable composition to ensure excellent handling properties, storage stability and flame retardancy.
In addition, it is one object of the present application is to stably maintain the above characteristics for a long period of time while achieving the above characteristics by using a non-capsulated phase change material.

### Technical Solution

Among the physical properties mentioned in this specification, the physical property in which a temperature affects the physical property is a physical property measured at room temperature, unless otherwise specified.
In this specification, the term room temperature is a natural temperature without warming or cooling, which means, for example, any one temperature within the range of about 10°C to 30°C, for example, a temperature of about

15°C, about 18°C, about 20°C, about 23°C or about 25°C or so. In addition, unless otherwise specified in this specification, the unit of temperature is °C.

Among the physical properties mentioned in this specification, when a pressure affects the result, the relevant physical property is a physical property measured at normal pressure, unless otherwise specified. The term normal pressure is a natural pressure without pressurization and depressurization, and usually a level in a range of about 700 mmHg to 800 mmHg or so is referred to as normal pressure.

Among the physical properties mentioned in this specification, when humidity affects the result, the relevant physical property is a physical property measured at the humidity which is not particularly controlled at room temperature and normal pressure, unless otherwise specified.

In this specification, a curable composition is disclosed.

The curable composition may comprise at least a resin component and a phase change material (PCM).

The term curable composition is a composition capable of being cured. The curing may mean a phenomenon in which the composition is hardened or a phenomenon in which the viscosity of the composition is increased by a chemical and/or material reaction. In this specification, the term cured product means a state in which the curable composition is cured.

The curable composition may be a composition capable of being cured according to a known method. In one example, the curable composition may be of an energy beam curing type, a moisture curing type, a thermal curing type, or a room temperature curing type, or a hybrid curing type in which two or more types of the above curing methods are applied.

If the curable composition is an energy beam curing type, the curing of the curable composition may be performed by irradiation with energy rays such as ultraviolet rays; if it is a moisture curing type, the curing of the curable composition may be performed by a method of maintaining appropriate moisture; if it is a thermal curing type, the curing of the curable composition may be performed by a method of applying appropriate heat; or if it is a room temperature curing type, the curing of the curable composition may be performed by a method of maintaining the curable composition at room temperature.

In one example, the curable composition may be a room temperature curing type capable of being cured by maintaining it at room temperature without irradiation of special energy rays or application of heat. Considering the phase of the phase change material included in the curable composition, the curing of the curable composition may be performed within an appropriate temperature range other than room temperature, even when the curable composition is curable at room temperature. The suitable temperature range is not particularly limited, but may be, for example, within a temperature range of about 40°C to 80°C or 50°C to 70°C.

The curable composition of the present application may be a one-component curable composition or a two-component curable composition. The one-component curable composition is a composition in which components necessary for curing are stored in a mixed state, and the two-component curable composition is a composition in which components necessary for curing are stored in a physically separated state. The two-component curable composition usually comprises so-called main agent part and curing agent part, and for curing, the main agent and curing agent parts are mixed. When the curable composition according to one example of the present application is a two-component curable composition, the curable composition may be a main agent part or a curing agent part of the two-component curable composition, or a mixture of the main agent part and the curing agent part.

The cured product formed by the curable composition of the present application may exhibit latent heat in a predetermined temperature range. The term latent heat is usually defined as a heat quantity required for a substance to cause a state change (phase transition) without any temperature change. However, when the cured product of the present application exhibits the latent heat, it is not always necessary to cause a state change as a whole. The latent heat of the cured product of the curable composition according to one example of the present application may be generated in the state change process of at least a part of the cured product or the component included in the cured product.

The matter that the cured product of the curable composition the present application exhibits latent heat in a predetermined temperature range means that the cured product exhibits an endothermic peak in a predetermined temperature range in a DSC (Differential Scanning Calorimeter) analysis according to the manner (latent heat measurement section in Examples) described in Examples. The process in which the cured product of the curable composition according to one example of the present application exhibits the latent heat may be an isothermal process. Therefore, the cured product can be applied to a product that generates heat to control the heat while maintaining the temperature of the product uniformly, and the impact of abnormal heating, explosion and/or ignition occurring in one product on other adjacent products can be minimized or prevented.

The lower limit of the latent heat of the cured product of the curable composition in the present application may be 30 J/g, 32.5 J/g, 35 J/g, 37.5 J/g, 40 J/g, 42.5 J/g, 45 J/g, 47.5 J /g, 50 J/g, 52.5 J/g, 55 J/g, 57.5 J/g, 60 J/g, 61 J/g, or 62 J/g or so, and the upper limit thereof may be 200 J/g, 195 J/g, 190 J/g, 185 J/g, 180 J/g, 175 J/g, 170 J/g, 165 J/g, 160 J/g, 155 J/g, 150 J/g, 145 J/g, 140 J/g, 135 J/g, 130 J/g, 125 J/g, 120 J/g, 115 J/g, 110 J/g, 105 J/g, 100 J/g, 95 J/g, 90 J/g, 85 J/g, 80 J/g, 75 J/g, 70 J/g, 65 J/g, 60 J/g, 55 J/g, 50 J/g, 45 J/g, or 40 J/g or so. The latent heat may be more

than or equal to, or more than any one of the above-described lower limits, or may be in a range of less than or equal to, or less than any one of the above-described upper limits while being more than or equal to, or more than any one of the above-described lower limits.

The cured product may exhibit the latent heat in a predetermined temperature range. The temperature zone in which the cured product exhibits the latent heat may be referred to as the latent heat zone. The latent heat zone may be within a range obtained by subtracting the latent heat zone start temperature from the latent heat zone end temperature.

Here, the latent heat zone start temperature is the temperature at the start point of the endothermic peak in the DSC analysis, and specifically, the temperature at the inflection point on the left onset of the endothermic peak. Here, the latent heat zone end temperature is the temperature at the end point of the endothermic peak in the DSC analysis, and specifically, the temperature at the inflection point on the right onset of the endothermic peak. In the DSC analysis, when two or more endothermic peaks are identified, the latent heat zone start temperature is the temperature at the start point of the first identified endothermic peak among the plurality of endothermic peaks (temperature at the inflection point on the left onset of the first identified endothermic peak), and the latent heat zone end temperature is the temperature at the end point of the last identified endothermic peak among the plurality of endothermic peaks (temperature at the inflection point on the right onset of the last identified endothermic peak).

In one example, the lower limit of the latent heat zone start temperature of the cured product may be 0°C, 5°C, 10°C, 15°C, 20°C, 25°C, 30°C, 35°C, 40°C, 45°C, 50°C, or 55°C or so, and the upper limit thereof may be 80°C, 75°C, 70°C, 65°C, 60°C, 55°C, 50°C, 45°C, 40°C, 35°C, 30°C, or 25°C or so. The latent heat zone start temperature may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

In one example, the lower limit of the latent heat zone end temperature of the cured product may be 30°C, 35°C, 40°C, 45°C, 50°C, 55°C, or 60°C or so, and the upper limit thereof may be 100°C, 95°C, 90°C, 85°C, 80°C, 75°C, 70°C, 65°C, or 60°C or so. The latent heat zone end temperature may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

The lower limit of the width of the latent heat zone (latent heat zone end temperature - latent heat zone start temperature) of such a cured product may be 5°C, 5.5°C, 6°C, 6.5°C, 7°C, 7.5°C, 8°C, 8.5°C, 9°C, 9.5°C, 10°C, 12°C, 14°C, 15°C, 16°C, 18°C, 19°C, 20°C, 25°C, 30°C, or 35°C or so, and the upper limit thereof may be 100°C, 95°C, 90°C, 85°C, 80°C, 75°C, 70°C, 65°C, 60°C, 55°C, 50°C, 45°C, 40°C, 35°C, 30°C, 25°C, or 20°C or so. The width of the latent heat zone may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

The cured product having the latent heat characteristics is applied to various heating products, whereby the relevant products can be operated in a stable and uniform temperature range. In addition, the cured product is applied to a product comprising a plurality of elements disposed to be relatively adjacent to each other, whereby the temperature of the entire product can be uniformly maintained, and the impact of the abnormal heat, ignition and/or explosion in any one element on other elements can be minimized or prevented. In particular, the cured product of the curable composition exhibiting the latent heat characteristics is applied to a product (e.g., secondary battery, or battery module or battery pack comprising the plurality of batteries) whose driving temperature must be maintained within the range of approximately 15°C to 60°C, whereby the heat can be efficiently controlled.

The cured product of the curable composition of the present application may stably maintain the latent heat characteristics for a long period of time. The curable composition may comprise a phase change material (PCM) so that the cured product thereof exhibits the latent heat characteristics. The phase change material may be a material absorbing heat in a process of phase change from solid to liquid, phase change from liquid to vapor, and/or phase change from solid to vapor.

In one example, a material absorbing heat in a process of phase change from solid to liquid may be used as the phase change material. Since such a material is transferred to a liquid phase after absorbing heat, it may be lost from the cured product due to leakage, and as a result, the heat absorbing properties of the cured product may also be lost over time. In the present application, the phase change material in the cured product is converted into a liquid phase through the selection of the resin component included in the curable composition forming the cured product, the control of the crosslinking degree, the control of the type and ratio of the phase change material, and/or the control of the preparing method of the curable composition. Even after the transition, it can be prevented from being lost in the cured product, and thus, the latent heat characteristics can be stably maintained for a long period of time.

The cured product of the curable composition according to one example of the present application may have

$L_R$ of Equation 1 below within a predetermined range. For example, the upper limit of the $L_R$ may be 5%, 4.5%, 4%, 3.5%, 3%, 2.5%, 2%, 1.5%, 1.4%, 1.3%, 1.2%, 1.1%, 1%, or 0.5 % or so, and the lower limit thereof may be 0%, or 0.01% or so. The $L_R$ may be less than or equal to, or less than any one of the above-described upper limits, or may be in a range of less than or equal to, or less than any one of the above-described upper limits while being more than or equal to, or more than any one of the above-described lower limits.

[Equation 1]

$$L_R = 100\times(m_1-m_2)/m_1$$

In Equation 1, $m_1$ is the initial weight of the cured product. This initial weight is the weight of the cured product before measuring the $m_2$. In Equation 1, $m_2$ is the weight of the cured product (cured product with the initial weight mi) after maintaining the cured product at 80°C for 24 hours. The maintenance at 80°C for 24 hours may be performed, for example, in a state where the cured product is placed on a filter paper. The units of $m_1$ and $m_2$ above are identical to each other, which may be, for example, g.

Normally, since the phase change material is converted to a liquid in an endothermic process, and the endothermic start temperature of a typical phase change material is less than 80°C, loss of a significant amount of the phase change material is expected when maintained at 80°C for 24 hours. However, in the present application, the phase change material can be stably maintained for a long period of time in the cured product, and therefore, it is possible to represent the $L_R$ in the above range.

Particularly, in the present application, the above characteristics may be exhibited even when a non-encapsulated phase change material as the phase change material is included in a main component.

For example, the lower limit of the ratio of the non-encapsulated phase change material based on the total weight of the phase change material included in the cured product may be 50 weight%, 55 weight%, 60 weight%, 65 weight%, 70 weight%, 75 weight%, 80 weight%, 85 weight%, 90 weight%, or 95 weight% or so, and the upper limit thereof may be 100 weight% or so. The ratio may be more than or equal to, or more than any one of the above-described lower limits, or may be in a range of less than or equal to, or less than any one of the above-described upper limits while being more than or equal to, or more than any one of the above-described lower limits. It is possible to secure the above characteristics in a state where the non-encapsulated phase change material is included in such a ratio.

The cured product of the curable composition according to one example of the present application may have $M_L$ according to Equation 2 below within a predetermined range. The upper limit of the $M_L$ may be 5%, 4.5%, 4%, 3.5%, 3%, 2.5%, 2%, 1.5%, 1%, 0.8%, or 0.6% or so, and the lower limit thereof may be 0%, or 0.01% or so. The $M_L$ may be less than or equal to, or less than any one of the above-described upper limits, or may be in a range of less than or equal to, or less than any one of the above-described upper limits while being more than or equal to, or more than any one of the above-described lower limits.

[Equation 2]

$$M_L = 100\times(m_3-m_4)/(m_3\times m_5)$$

In Equation 2, $m_3$ means the initial weight of the cured product, which is the weight before maintaining the cured product in water (e.g., distilled water) at room temperature for 96 hours as follows. $m_4$ in Equation 2 is the weight measured after immersing the cured product with the initial weight $m_3$ in water (e.g., distilled water) at room temperature for 96 hours, and $m_5$ is the weight ratio of the phase change material included in the cured product. The units of $m_3$ and $m_4$ above are identical to each other, which may be, for example, g. Also, the unit of $m_5$ above is weight%, and it is a percentage of the weight of the phase change material included in the cured product relative to the total weight of the cured product. At this time, the cured product for measuring $m_5$ above may be the cured product with the weight $m_3$ (i.e., the cured product before being immersed in water (e.g., distilled water) at room temperature for 96 hours). In addition, the weight of the phase change material applied to the calculation of $m_5$ above is the weight of the entire phase change material present in the cured product, and thus if the cured product contains only the polar crystalline phase change material, the $m_5$ may be determined based on the weight of only the polar crystalline phase change material, and if the cured product comprises the polar crystalline phase change material and another phase change material together, the m5 may be determined based on the total weight of the polar crystalline phase change material and another phase change material. Furthermore, the $m_4$ may be a weight measured after taking the cured product out of water and then removing water.

In the cured product of the present application, even when a polar crystalline phase change material to be

described below is applied as the phase change material, the $M_L$ of Equation 2 above may be within the above range. The polar crystalline phase change material is advantageous in exhibiting suitable heat absorbing properties required in the present application, but has good compatibility with water because it has polarity, and thus it can be easily lost upon contact with water. However, in the present application, when the polar crystalline phase change material is applied, in particular, even when the non-encapsulated polar crystalline phase change material is applied, it is also possible to represent the above characteristics.

For example, the lower limit of the ratio of the polar crystalline phase change material or the non-encapsulated polar crystalline phase change material based on the total weight of the phase change material included in the cured product may be 30 weight%, 35 weight%, 40 weight%, 45 weight%, 50 weight%, 55 weight%, 60 weight%, 65 weight%, 70 weight%, 75 weight%, 80 weight%, 85 weight%, 90 weight%, or 95 weight% or so, and the upper limit thereof may be 100 weight%, 95 weight%, 90 weight%, 85 weight%, 80 weight%, 75 weight%, or 70 weight% or so. The ratio may be more than or equal to, or more than any one of the above-described lower limits, or may be in a range of less than or equal to, or less than any one of the above-described upper limits while being more than or equal to, or more than any one of the above-described lower limits. The characteristics can be secured in a state including the polar crystalline phase change material or the non-encapsulated polar crystalline phase change material in such a ratio.

Such characteristics can be achieved by adjusting the crosslinked network of the cured product and/or the molecular weight characteristics of the resin component constituting the network. In general, when the crosslinking degree of the crosslinked network is high and/or when the molecular weight of the resin component is high, the properties of maintaining the phase change material increase, and as a result, when the phase change material becomes a liquid phase and/or when it comes into contact with water, the leakage of the relevant material can also be effectively suppressed. However, when the crosslinking degree of the crosslinked network is too high or the molecular weight of the resin component is too high, the flexibility or elasticity of the cured product is relatively low, so that it is not suitable when impact resistance or vibration resistance is required.

In the present application, all of the above characteristics can be satisfied by controlling the crosslinking degree of the cured product to have hardness and/or elasticity characteristics as described below.

Shore A hardness of the cured product of the curable composition according to one example of the present application may be adjusted. For example, the upper limit of the Shore A hardness may be 10, 9.9, 9.8, 9.7, 9.6, 9.5, 9.4, 9.3, 9.2, 9.1, 9.0, 8.5, 8, 7.5, 7, 6.5, or 6 or so, and the lower limit thereof may be 0.01, 0.1, 0.5, 1, 1.2, 1.4, 1.6, 1.8, 2, 5, 5.5, 6, 6.5, 7, 7.5, 8, 8.5, or 9 or so. The Shore A hardness may be less than or equal to, or less than any one of the above-described upper limits, or may be in a range of less than or equal to, or less than any one of the above-described upper limits while being more than or equal to, or more than any one of the above-described lower limits.

The hardness of the cured product is determined according to the type and/or crosslinking degree of the resin component constituting the cured product. In the present application, a crosslinked network is configured so that the cured product can exhibit a hardness within the above range, and through this, it is possible to provide a network capable of stably maintaining the phase change material. In addition, the hardness within the above range enables the cured product of the curable composition to stably fill a space with a complicated shape, and can also improve vibration resistance or impact resistance.

The cured product of the curable composition according to one example of the present application may have Tanδ of the following equation 3 within a predetermined range. For example, the lower limit of Tanδ below may be 0.01, 0.05, 0.1, 0.15, 0.16, 0.18, 0.2, 0.22, 0.25, 0.3, 0.35, or 0.4 or so, and the upper limit thereof may be 5, 4.5, 4, 3.5, 3, 2.5, 2, 1.9, 1.8, 1.7, 1.6, 1.5, 1.4, 1.3, 1.2, 1, 0.9, 0.8, 0.7, 0.6, 0.5, 0.4, 0.3, 0.25, or 0.25 or so. The Tan δ may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

[Equation 3]

$$\mathrm{Tan}\delta = G''/G'$$

G' of Equation 3 is the storage elastic modulus of the cured product at room temperature, and G" is the loss elastic modulus of the cured product at room temperature. The method for measuring the storage elastic modulus and loss elastic modulus is are listed in examples.

As confirmed from Equation 3, Tanδ is the ratio of the loss elastic modulus G" to the storage elastic modulus G'. In general, the higher the storage elastic modulus, the cured product shows a behavior closer to that of an elastic body, and the higher the loss elastic modulus, the cured product shows a behavior closer to that of a viscous body or liquid. The cured product having the ratio of G' and G" can exhibit properties desired in the present application.

The lower limit of the storage elastic modulus (i.e., G' in Formula 3) of the cured product at room temperature

may be 0.2 MPa, 0.21 MPa, 0.22 MPa, 0.23 MPa, 0.24 MPa, 0.25 MPa, 0.26 MPa, 0.27 MPa, 0.28 MPa, 0.29 MPa, 0.3 MPa, or 0.31 MPa or so, and the upper limit thereof may be 10 MPa, 9 MPa, 8 MPa, 7 MPa, 6 MPa, 5 MPa, 4 MPa, 3 MPa, 2 MPa, 1 MPa, 0.9 MPa, 0.8 MPa, 0.7 MPa, 0.6 MPa, 0.5 MPa, 0.4 MPa, 0.3 MPa, 0.29 MPa, 0.28 MPa, or 0.27 MPa or so. The storage elastic modulus may be more than or equal to, or more than any one of the above-described lower limits, or may be in a range of less than or equal to, or less than any one of the above-described upper limits while being more than or equal to, or more than any one of the above-described lower limits. The cured product having G' above can exhibit properties desired in the present application.

The hardness and/or elastic properties of the cured product can be achieved by adjusting the cross-linked network of the cured product. However, it is difficult to achieve a cured product having the above characteristics by curing only a general resin component. In the present application, the desired crosslinked network can be achieved by adjusting the type of resin component forming the crosslinked network, the type of the phase change material, the preparation method of the curable composition, and/or the curing method of the curable composition.

This crosslinked network of the present application may be called a semi-IPN (Interpenetrating Polymer Network). The semi-IPN means that the crosslinked network comprises a crosslinked structure of the resin components, and further comprises a structure formed by the interaction between the phase change materials and/or the interaction between the phase change material and the crosslinked structure of the resin component. Such a semi-IPN structure can be achieved by adjusting the type of resin component, the type of the phase change material, the preparation method of the curable composition, and/or the curing method of the curable composition.

Meanwhile, the cured product according to one example of the present application may have a flame retardancy evaluation result of V-0 or V-1 grade as measured according to the UL94V measurement standard. Through this, it is possible to secure excellent flame retardancy so that even when abnormal heat generation, explosion, or ignition occurs in any one element among a plurality of elements, the effect of such heat generation, explosion, or ignition on other adjacent elements can be prevented or minimized.

The curable composition may comprise a resin component. Such a resin component may be a curable resin component capable of being cured. The category of the term curable resin component includes a component capable of forming a resin component after curing reaction as well as a case in which it itself is a so-called resin component. Therefore, the curable resin component may be a monomolecular, oligomeric, or polymeric compound.

In the present application, as the resin component, a component having a predetermined weight average molecular weight (Mw) may be used. For example, the lower limit of the weight average molecular weight of the resin component may be 9000 g/mol, 10000 g/mol, 15000 g/mol, 20000 g/mol, or 25000 g/mol or so, and the upper limit thereof may be 100000 g/mol, 90000 g/mol, 80000 g/mol, 70000 g/mol, 60000 g/mol, 50000 g/mol, 40000 g/mol, or 30000 g/mol or so. The weight average molecular weight may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. The resin component having such a molecular weight characteristic is advantageous for forming a component in the composition, for example, a cured product of a desired crosslinked network.

The type of resin component is not particularly limited. In one example, the resin component may be a urethane resin component, a silicone resin component, an acrylic resin component, or an epoxy resin component. The urethane resin component, silicone resin component, acrylic resin component or epoxy resin component may be polyurethane, a silicone resin, an acrylic resin, or an epoxy resin, or may be a component to form the polyurethane, silicone resin, acrylic resin, or epoxy resin through a curing reaction. The specific type of the applicable resin component is not particularly limited, and among known urethane resin components, silicone resin components, acrylic resin components, or epoxy resin components, those exhibiting the molecular weight characteristics as described above may be selected and used, and by controlling the crosslinking degree of such a resin component, it is also possible to control the crosslinked network and the like of the final cured product. In particular, the silicone resin component or urethane resin component may be used in that it may effectively form the semi-IPN structure together with a phase change material to be described below, particularly a crystalline polar phase change material.

For example, when the resin component is a silicone resin component, the component is an addition-curable silicone resin component, which may include (1) a polyorganosiloxane containing two or more alkenyl groups in the molecule, and (2) a polyorganosiloxane containing two or more silicon-bonded hydrogen atoms in the molecule. The compound may form a cured product by addition reaction in the presence of a catalyst such as a platinum catalyst.

The (1) polyorganosiloxane contains at least two alkenyl groups. At this time, a specific example of the alkenyl group includes a vinyl group, an allyl group, a butenyl group, a pentenyl group, a hexenyl group or a heptenyl group, and the like, and a vinyl group of the foregoing is usually applied, but is not limited thereto. In the (1) polyorganosiloxane, the bonding position of the above-described alkenyl group is not particularly limited. For example, the alkenyl group may be bonded to the end of the molecular chain and/or to the side chain of the molecular chain. In addition, in the (1) polyorganosiloxane, the type of the substituent that may be included in addition to the above-described alkenyl group

may include an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; and a halogen-substituted alkyl group such as a chloromethyl group, a 3-chloropropyl group, or a 3,3,3-trifluoropropyl group, and the like, and a methyl group or a phenyl group of the foregoing is usually applied, but is not limited thereto.

The molecular structure of the (1) polyorganosiloxane is not particularly limited, which may also have, for example, any shape, such as a linear, branched, cyclic, network, or partially branched linear structure. In general, one having a linear molecular structure of such molecular structures is usually applied, but is not limited thereto.

A more specific example of the polyorganosiloxane (1) may include a dimethylsiloxane-methylvinylsiloxane copolymer blocked with trimethylsiloxane groups at both ends of the molecular chain, methylvinylpolysiloxane blocked with trimethylsiloxane groups at both ends of the molecular chain, a dimethylsiloxane-methylvinylsiloxane-methylphenylsiloxane copolymer blocked with trimethylsiloxane groups at both ends of the molecular chain, dimethylpolysiloxane blocked with dimethylvinylsiloxane groups at both ends of the molecular chain, methylvinylpolysiloxane blocked with dimethylvinylsiloxane groups at both ends of the molecular chain, a dimethylsiloxane-methylvinylsiloxane copolymer blocked with dimethylvinylsiloxane groups at both ends of the molecular chain, a dimethylsiloxane-methylvinylsiloxane-methylphenylsiloxane copolymer blocked with dimethylvinylsiloxane groups at both ends of the molecular chain, a polyorganosiloxane copolymer comprising a siloxane unit represented by $R^1_2SiO_{2/2}$ and a siloxane unit represented by $R^1_2R^2SiO_{1/2}$ and a siloxane unit represented by $SiO_{4/2}$, a polyorganosiloxane copolymer comprising a siloxane unit represented by $R^1_2R^2SiO_{1/2}$ and a siloxane unit represented by $SiO_{4/2}$, a polyorganosiloxane copolymer comprising a siloxane unit represented by $R^1R^2SiO_{2/2}$ and a siloxane unit represented by $R^1SiO_{3/2}$ or a siloxane unit represented by $R^2SiO_{3/2}$, and a mixture of two or more of the foregoing, but is not limited thereto. Here, $R^1$ is a hydrocarbon group other than the alkenyl group, which may be, specifically, an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like. In addition, here, $R^2$ is an alkenyl group, which may be, specifically, a vinyl group, an allyl group, a butenyl group, a pentenyl group, a hexenyl group, or a heptenyl group, and the like.

In the addition-curable silicone composition, (2) polyorganosiloxane may serve to crosslink the (1) polyorganosiloxane. In the (2) polyorganosiloxane, the bonding position of the hydrogen atom is not particularly limited, and for example, it may be bonded to the terminal and/or side chain of the molecular chain. In addition, in the (2) polyorganosiloxane, the type of the substituent that may be included other than the silicon-bonded hydrogen atoms is not particularly limited, which may include, for example, an alkyl group, an aryl group, an aralkyl group or a halogen-substituted alkyl group, and the like, as mentioned in (1) polyorganosiloxane, and a methyl group or a phenyl group of the foregoing is usually applied, but is not limited thereto.

The molecular structure of the (2) polyorganosiloxane is not particularly limited, which may also have, for example, any shape, such as a linear, branched, cyclic, network, or partially branched linear structure. In general, one having a linear molecular structure of such molecular structures is usually applied, but is not limited thereto.

A more specific example of the (2) polyorganosiloxane may include methylhydrogenpolysiloxane blocked with trimethylsiloxane groups at both ends of the molecular chain, a dimethylsiloxane-methylhydrogen copolymer blocked with trimethylsiloxane groups at both ends of the molecular chain, a dimethylsiloxane-methylhydrogensiloxane-methylphenylsiloxane copolymer blocked with trimethylsiloxane groups at both ends of the molecular chain, dimethylpolysiloxane blocked with dimethylhydrogensiloxane groups at both ends of the molecular chain, a dimethylsiloxane-methylphenylsiloxane copolymer blocked with dimethylhydrogensiloxane groups at both ends of the molecular chain, methylphenylpolysiloxane blocked with dimethylhydrogensiloxane groups at both ends of the molecular chain, a polyorganosiloxane copolymer comprising a siloxane unit represented by $R^1_3SiO_{1/2}$, a siloxane unit represented by $R^1_2HSiO_{1/2}$ and a siloxane unit represented by $SiO_{4/2}$, a polyorganosiloxane copolymer comprising a siloxane unit represented by $R^1_2HSiO_{1/2}$ and a siloxane unit represented by $SiO_{4/2}$, a polyorganosiloxane copolymer comprising a siloxane unit represented by $R^1HSiO_{2/2}$ and a siloxane unit represented by $R^1SiO_{3/2}$ or a siloxane unit represented by $HSiO_{3/2}$ and a mixture of two or more of the foregoing, but is not limited thereto. Here, $R^1$ is a hydrocarbon group other than the alkenyl group, which may be, specifically, an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like.

The content of the (2) polyorganosiloxane is not particularly limited as long as it is included to the extent that appropriate curing can be achieved. For example, the (2) polyorganosiloxane may be included in an amount such that 0.5 to 10 silicon-bonded hydrogen atoms are present with respect to one alkenyl group included in the aforementioned (1) polyorganosiloxane. In this range, the curing can sufficiently proceed and the heat resistance can be ensured.

The addition-curable silicone resin component may further comprise platinum or a platinum compound as the

catalyst for curing. A specific type of such platinum or platinum compound is not particularly limited. The ratio of the catalyst may also be adjusted to a level at which proper curing can be achieved.

In another example, the silicone resin component is a condensation-curable silicone resin component, which may comprise, for example, (a) an alkoxy group-containing siloxane polymer; and (b) a hydroxyl group-containing siloxane polymer.

The (a) siloxane polymer may be, for example, a compound represented by the following formula 1.

[Formula 1] $R^1_aR^2_bSiO_c(OR^3)_d$

In Formula 1, $R^1$ and $R^2$ each independently represent a hydrogen atom or a substituted or unsubstituted monovalent hydrocarbon group, $R^3$ represents an alkyl group, where if pluralities of $R^1$, $R^2$ and $R^3$ are each present, they may be the same or different from each other, and a and b each independently represent a number of 0 or more and less than 1, a+b represents a number of more than 0 and less than 2, c represents a number of more than 0 and less than 2, d represents a number of more than 0 and less than 4, and $a+b+c\times2+d$ is 4.

In the definition of Formula 1, the monovalent hydrocarbon group may be, for example, an alkyl group with 1 to 8 carbon atoms, a phenyl group, a benzyl group, or a tolyl group, and the like, where the alkyl group with 1 to 8 carbon atoms may be a methyl group, an ethyl group, a propyl group, an isopropyl group, a butyl group, a pentyl group, a hexyl group, a heptyl group or an octyl group, and the like. In addition, in the definition of Formula 1, the monovalent hydrocarbon group may be substituted with, for example, a known substituent such as halogen, an amino group, a mercapto group, an isocyanate group, a glycidyl group, a glycidoxy group, or a ureido group.

In the definition of Formula 1, an example of the alkyl group in $R^3$ may include a methyl group, an ethyl group, a propyl group, an isopropyl group, or a butyl group, and the like. Among the alkyl groups, a methyl group or an ethyl group, and the like is usually applied, without being limited thereto.

Among the polymers of Formula 1, branched or tertiarily crosslinked siloxane polymers may be used. In addition, in this (a) siloxane polymer, the hydroxyl groups may remain within the range without impairing the purpose, specifically, within the range without inhibiting a dealcoholization reaction.

The (a) siloxane polymer can be produced, for example, by hydrolyzing and condensing polyfunctional alkoxysilane or polyfunctional chlorosilane, and the like. An average person skilled in the art can easily select an appropriate polyfunctional alkoxysilane or chlorosilane according to the desired (a) siloxane polymer, and can also easily control the conditions of the hydrolysis and condensation reaction using the same. Meanwhile, at the time of producing the (a) siloxane polymer, according to the purpose, an appropriate monofunctional alkoxysilane may also be used in combination.

As the (a) siloxane polymer, for example, commercially available organosiloxane polymers such as Shin-Etsu Silicone's X40-9220 or X40-9225, GE Toray Silicones' XR31-B1410, XR31-B0270 or XR31-B2733, and the like may be used.

As the (b) hydroxyl group-containing siloxane polymer included in the condensation-curable silicone composition, for example, a compound represented by the following formula 2 may be used.

[Formula 2]

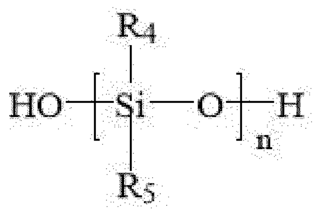

In Formula 2, $R_4$ and $R_5$ each independently represent a hydrogen atom or a substituted or unsubstituted monovalent hydrocarbon group, where if pluralities of $R_4$ and $R_5$ are each present, they may be the same or different from each other, and n represents an integer of 5 to 2,000.

In the definition of Formula 2, a specific type of the monovalent hydrocarbon group may include, for example, the same hydrocarbon group as in the case of Formula 1.

The (b) siloxane polymer can be produced, for example, by hydrolyzing and condensing dialkoxysilane and/or dichlorosilane. An average person skilled in the art can easily select an appropriate dialkoxy silane or dichlorosilane according to the desired (b) siloxane polymer, and can also easily control the conditions of the hydrolysis and condensation reaction using the same. As the (b) siloxane polymer, for example, commercially available bifunctional organosiloxane polymers such as GE Toray Silicones' XC96-723, YF-3800, or YF-3804 may be used.

The above-described addition curing type or condensation curing type silicone composition is one example of

the silicone resin component applied in the present application.

In another example, if the resin component is a urethane resin component, the component may comprise at least a polyol and a polyisocyanate. Here, the polyol is a compound containing at least two hydroxyl groups, and the polyisocyanate is a compound containing at least two isocyanate groups. These compounds may each be a monomolecular, oligomeric, or polymeric compound.

There is no great limitation on the type of the polyol, and for example, a known polyether polyol or polyester polyol may be applied. Here, as the polyether polyol, polyalkylene glycol, in which the alkylene glycol moiety has 1 to 20, 1 to 16, 1 to 12, 1 to 8, or 1 to 4 carbon atoms, such as polypropylene glycol or polyethylene glycol, or ethylene oxide/propylene oxide copolymer-based polyol, PTME (poly(tetramethylene glycol)), PHMG (poly(hexamethylene ether glycol)), and the like are known. Also, as the polyester polyol, a polyol synthesized from dibasic acid and glycol, such as polyester polyol or polycaprolactone polyol (obtained from ring-opening polymerization of cyclic lactone) containing the dibasic acid unit and glycol unit, and the like are known. Furthermore, in addition to such polyols, hydrocarbon-based polyols such as carbonate-based polyols, vegetable polyol castor oil, HTPB (hydroxyl-terminated polybutadiene), or HTPIB (hydroxyl-terminated polyisobutylene) are also known. An appropriate kind may be selected and used among the known polyols as above. As the polyisocyanate, an appropriate kind may be selected and used among known aromatic or aliphatic polyisocyanate compounds.

The lower limit of the ratio of the resin component based on the total weight of the curable composition may be 10 weight%, 15 weight%, 20 weight%, 25 weight%, 30 weight%, 35 weight%, 40 weight%, 45 weight%, 50 weight%, 55 weight%, 60 weight%, 65 weight%, 70 weight%, 75 weight%, or 80 weight% or so, and the upper limit thereof may be 95 weight%, 90 weight%, 85 weight%, 80 weight%, 75 weight%, 70 weight%, 65 weight%, 60 weight%, 55 weight%, 50 weight%, 45 weight%, 40 weight%, 35 weight%, or 30 weight% or so. Such a ratio is based on the total weight of the curable composition, provided that when the curable composition comprises a solvent, it is a ratio based on the total weight of the curable composition excluding the solvent. The ratio may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

The curable composition may further comprise a so-called phase change material (PCM) in order to secure the above-described latent heat characteristics. The phase change material is a material that is endothermic or exothermic in a phase transition process, as is known. In general, the phase transition process is an isothermal process.

The phase transition in which the phase change material is endothermic or exothermic may be a phase transition from a solid to a solid, a phase transition from a solid to a liquid, a phase transition from a solid to a gas, or a phase transition from a liquid to a gas. The above-described phase change reaction (solid → solid, solid → liquid, solid → gas, liquid → gas) may be an endothermic reaction. The material having a phase transition from a solid to a liquid is advantageous in terms of efficiency, but such a material becomes a liquid phase after the phase transition, so that it is difficult to be maintained in the cured product. However, the cured product of the present application exhibits the above-described weight change rate, and thus a material that undergoes a phase transition from a solid to a liquid may be applied. Accordingly, the phase change material applied in the present application may be a material in which a phase transition occurs between a solid phase and a liquid phase, and may be a material that the phase transition reaction from the solid phase to the liquid phase may be an endothermic reaction.

The lower limit of the weight ratio of the phase change material relative to 100 parts by weight of the resin component in the curable composition may be 40 parts by weight, 45 parts by weight, 50 parts by weight, 55 parts by weight, 60 parts by weight, 65 parts by weight, 70 parts by weight, 75 parts by weight, 80 parts by weight, 85 parts by weight, 90 parts by weight, or 95 parts by weight or so, and the upper limit thereof may be 200 parts by weight, 190 parts by weight, 180 parts by weight, 170 parts by weight, 160 parts by weight, 150 parts by weight, 140 parts by weight, 130 parts by weight, 120 parts by weight, 110 parts by weight, 100 parts by weight, 90 parts by weight, 80 parts by weight, 70 parts by weight, or 65 parts by weight or so. The ratio may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

In order to achieve the above-described semi-IPN structure, a crystalline polar phase change material may be used as the phase change material. The matter that the phase change material has polarity means that the phase change material contains a polar functional group, and the type of such a polar functional group includes a hydroxyl group, an alkylene oxide residue (e.g., alkylene oxide residue with 1 to 20 carbon atoms, 1 to 16 carbon atoms, 1 to 12 carbon atoms, 1 to 8 carbon atoms, or 1 to 4 carbon atoms) and/or a carboxyl group, and the like, and in particular, the phase change material containing the hydroxy group and/or alkylene oxide residue (e.g., alkylene oxide residue with 1 to 20 carbon atoms, 1 to 16 carbon atoms, 1 to 12 carbon atoms, 1 to 8 carbon atoms, or 1 to 4 carbon atoms) may be applied. The phase change material may physically or chemically interact with the resin component or its cross-linked structure and/or other phase change materials by such a polar functional group, thereby realizing the semi-IPN. The lower limit

of the number of polar functional groups included in the phase change material may be 1, or 2 or so, and the upper limit thereof may be 100, 95, 90, 85, 80, 75, 70, 65, 60, 55, 50, 45, 40, 35, 30, 25, 20, 15, 10, 9, 8, 7, 6, 5, 4, 3, or 2 or so. The number of the polar functional groups may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

Meanwhile, the matter that the phase change material is crystalline means that the phase change material exhibits a melting point within a predetermined range in the DSC analysis of Examples to be described below. Therefore, an amorphous material does not have the melting point.

In this specification, the terms crystalline polar phase change material and polar crystalline phase change material have the same meaning.

The lower limit of the melting point (Tm) of such a crystalline polar phase change material may be 1°C, 1.5°C, 2°C, 2.5°C, 3°C, 3.5°C, 4°C, 5°C, 10°C, 15°C, 20°C, 25°C, 30°C, 35°C, 40°C, 45°C, 50°C, 55°C, or 60°C or so, and the upper limit thereof may be 95°C, 90°C, 85°C, 80°C, 79°C, 78°C, 77°C, 76°C, 75°C, 74°C, 73°C, 72°C, 71°C or 70°C, 65°C, 60°C, 55°C, 50°C, 45°C, or 40°C or so. The melting point may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

In order to efficiently form the semi-IPN, a material having a molecular weight of a certain level or higher may be used as the polar crystalline phase change material. For example, the lower limit of the number average molecular weight (Mn) of the polar crystalline phase change material may be 1,000 g/mol, 1,200 g/mol, 1,400 g/mol, 1,600 g/mol, 1,800 g/mol, 2,000 g/mol, 2,500 g/mol, 3,000 g/mol, 3,500 g/mol, 3,800 g/mol, or 4,000 g/mol or so, and the upper limit thereof may be 10,000 g/mol, 9,500 g/mol, 9,000 g/mol, 8,500 g/mol, 8,000 g/mol, 7,500 g/mol, 7,000 g/mol, 6,500 g/mol, 6,000 g/mol, 5,500 g/mol, 5,000 g/mol, 4,500 g/mol, or 4,000 g/mol or so. The number average molecular weight may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. The material having a number average molecular weight in such a level may effectively form a semi-IPN structure by the physical or chemical interaction, and such a structure may be made to exhibit a desired level of hardness or elastic property. In addition, when the number average molecular weight in the above range is satisfied, the melting point of the material may be formed at an appropriate level in relation to the normal operating temperature range of the heat-generating product, and accordingly, when it is applied to the heat-generating product, it is possible to effectively prevent the problem of deteriorating the product lifetime due to heat generation.

In order to effectively form the semi-IPN structure, a material having a linear structure may be applied as the material.

The type of such a polar crystalline phase change material is not particularly limited, where for example, a polyalcohol may be used. The term polyalcohol means a compound having two or more hydroxyl groups. The lower limit of the number of hydroxy groups included in the polyalcohol may be 2 or so, and the upper limit thereof may be 100, 95, 90, 85, 80, 75, 70, 65, 60, 55 50, 45, 40, 35, 30, 25, 20, 15, 10, 9, 8, 7, 6, 5, 4, 3, or 2 or so. The number of hydroxy groups may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

Such a polyalcohol, particularly, a linear polyalcohol having the number average molecular weight, may effectively form the semi-IPN while exhibiting desired latent heat characteristics. A specific example of polyalcohols may be exemplified by one or more selected from the group consisting of a polyalkylene glycol (e.g., polyalkylene glycol whose alkylene glycol moiety has carbon atoms in a range of 1 to 20, 1 to 16, 1 to 12, 1 to 8, or 1 to 4) such as glycerin and polyethylene glycol (PEG), xylitol and erythritol. In terms of easily securing the number average molecular weight in the above-described range, the polyalkylene glycol may be applied, and in particular, the polyalkylene glycol having a linear structure may be applied.

The lower limit of the latent heat exhibited by such a crystalline polar phase change material may be 100 J/g, 110 J/g, 120 J/g, 130 J/g, 140 J/g, 150 J/g, 155 J/g, 160 J /g, 165 J/g, 170 J/g, 175 J/g, or 180 J/g or so, and the upper limit thereof may be 300 J/g, 280 J/g, 260 J/g, 240 J/g, 220 J/g, 200 J/g, 190 J/g, 180 J/g, 170 J/g, or 165 J/g or so. The latent heat may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

Meanwhile, the lower limit of the latent heat zone initiation temperature of the crystalline polar phase change

material may be 20°C, 30°C, 40°C, 45°C, 50°C, or 55°C or so, and the upper limit thereof may be 100°C, 95°C, 90°C, 85°C, 80°C, 75°C, 70°C, 65°C, or 60°C or so. The temperature may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. Meanwhile, the definition of the latent heat zone initiation temperature is the same as the latent heat zone initiation temperature of the cured product.

The upper limit of the latent heat zone end temperature of the crystalline polar phase change material may be 200°C, 150°C, 100°C, 95°C, 90°C, 85°C, 80°C, 75°C, or 70°C or so, and the lower limit thereof may be 30°C, 35°C, 40°C, 45°C, 50°C, 55°C, 60°C, or 65°C or so. The temperature may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. Meanwhile, the definition of the latent heat zone end temperature is the same as the latent heat zone end temperature of the cured product.

The lower limit of the width (latent heat zone end temperature-latent heat zone initiation temperature) of the latent heat zone of the crystalline polar phase change material may be 1°C, 2°C, 3°C, 4°C, 5°C, 6°C, 7°C, 8°C, 9°C, or 9.5°C or so, and the upper limit thereof may be 100°C, 90°C, 80°C, 70°C, 60°C, 50°C, 40°C, 30°C, 20°C, or 10°C or so. The width may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

The material having the number average molecular weight, linear structure and/or latent heat characteristic may be selected from materials known as the above-described polar crystalline phase change material.

For the formation of the semi-IPN, the content of the polar crystalline phase change material may be controlled. For example, the lower limit of the ratio of the polar crystalline phase change material based on the total weight of the phase change material contained in the curable composition or the cured product may be 30 weight%, 35 weight%, 40 weight%, 45 weight%, 50 weight%, 55 weight%, 60 weight%, 65 weight%, 70 weight%, 75 weight%, 80 weight%, 85 weight%, 90 weight%, or 95 weight% or so, the upper limit thereof may be 100 weight%, 99 weight%, 98 weight%, 95 weight%, 90 weight%, 85 weight%, 80 weight%, 75 weight%, or 70 weight% or so. The ratio may be more than or equal to, or more than any one of the above-described lower limits, or may be in a range of less than or equal to, or less than any one of the above-described upper limits while being more than or equal to, or more than any one of the above-described lower limits. The polar crystalline phase change material included in such a ratio effectively forms the above-described semi-IPN. For the formation of Semi-IPN, the crystalline polar phase change material may be a non-encapsulated material.

The curable composition may also further comprise a phase change material different from the crystalline polar phase change material. Such a phase change material may be referred to as a second phase change material for convenience. As the second phase change material, for example, one or more selected from the group consisting of a fatty acid, a ketone compound, D-lactic acid, and a paraffin compound may be exemplified, without being limited thereto.

Here, as the fatty acid, formic acid, n-octanoic acid, lauric acid or palmitic acid, stearic acid, and the like may be exemplified; as the ketone compound, 2-pentadecanone or 4-heptadecanone, and the like ay be exemplified; and as the paraffin compound, n-heptadecanone, n-octadecane, n-nonadecane, n-eicosane, n-henicosane, n-docosane, n-tricosane, n-pentacosane, n-hexacosane, n-heptacosane, n-octacosane, n-nonacosane, n-triacontane, n-hentriacontane, n-dotriacontane, n-triatriacontane or other higher order paraffins (Paraffin C16~C18, Paraffin C13~C24, RT 35 HC, Paraffin C16~C28, Paraffin C20-C33, Paraffin C22-C45, Paraffin C22-C50,Paraffin natural wax 811, Paraffin natural wax 106, etc.) and the like may be exemplified.

As the second phase change material, for example, paraffin with 5 or more carbon atoms may be used. In another example, the carbon number of the paraffin may be within the range of 5 to 40. Such paraffin may be an alkane having the carbon number.

If applied, the lower limit of the melting point (Tm) of the second phase change material may be 1°C, 1.5°C, 2°C, 2.5°C, 3°C, 3.5°C, 4°C, 5°C, 10°C, 15°C, 20°C, 25°C, 30°C, 35°C, 40°C, 45°C, 50°C, 55°C, or 60°C or so, and the upper limit may be 95°C, 90°C, 85°C, 80°C, 79°C, 78°C, 77°C, 76°C, 75°C, 74°C, 73°C, 72°C, 71°C or 70°C, 65°C, 60°C, 55°C, 50°C, 45°C, or 40°C or so. The melting point may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

If applied, the lower limit of the latent heat exhibited by the second phase change material may be 100 J/g, 110 J/g, 120 J/g, 130 J/g, 140 J/g, 150 J/g, 155 J/g, 160 J/g, 165 J/g, 170 J/g, 175 J/g, or 180 J/g or so, and the upper limit thereof may be 300 J/g, 280 J/g, 260 J/g, 240 J/g, 220 J/g, 200 J/g, 190 J/g, 180 J/g, 170 J/g, 165 J/g, 160 J/g, or 155 J/g or so. The latent heat may be more than or equal to, or more than any one of the above-described lower limits, or

may be less than or equal to, or less than any one of the above-described upper limits, or may be in a range of less than or equal to, or less than any one of the above-described upper limits while being more than or equal to, or more than any one of the above-described lower limits.

The lower limit of the latent heat zone initiation temperature of the second phase change material may be 10°C, 15°C, 20°C, 30°C, 35°C, or 40°C or so, and the upper limit thereof may be 100°C, 95°C, 90°C, 85°C, 80°C, 75°C, 70°C, 65°C, 60°C, 55°C, 50°C, or 45°C or so. The temperature may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. Meanwhile, the definition of the latent heat zone initiation temperature is the same as the latent heat zone initiation temperature of the cured product.

The upper limit of the latent heat zone end temperature of the second phase change material may be 200°C, 150°C, 100°C, 95°C, 90°C, 85°C, 80°C, 75°C, 70°C, 65°C, 60°C, 55°C, 50°C, 45°C, or 40°C or so, and the lower limit thereof may be 10°C, 15°C, 20°C, 25°C, 30°C, 35°C, 40°C, or 45°C or so. The temperature may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. Meanwhile, the definition of the latent heat zone end temperature is the same as the latent heat zone end temperature of the cured product.

The lower limit of the width (latent heat zone end temperature - latent heat zone initiation temperature) of the latent heat zone of the second phase change material may be 1°C, 2°C, 3°C, 4°C, 5°C, 6°C, 7°C, 8°C, 9°C, or 9.5°C or so, and the upper limit thereof may be 100°C, 90°C, 80°C, 70°C, 60°C, 50°C, 40°C, 30°C, 20°C, 10°C, 9°C, 8°C, 7.5°C, 7°C, 6°C, or 5.5°C or so. The width may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

If applied, a non-polar phase change material may be used as the second phase change material in consideration of the formation efficiency of the semi-IPN structure as described above. The term non-polar phase change material means a phase change material without any polar functional group in which the above-described polar phase change material has.

For achieving desired endothermic properties and effectively forming the desired semi-IPN, when included, the properties of the second phase change material may be adjusted in relation to the amorphous polar phase change material.

For example, when included, the absolute value of the difference between the melting point of the amorphous polar phase change material and the melting point of the second phase change material may be adjusted. The lower limit of the absolute value may be 5°C, 7°C, 9°C, 11°C, 13°C, 15°C, 17°C, 19°C, 21°C, 23°C, or 25°C or so, and the upper limit thereof may be 60°C, 48°C, 46°C, 44°C, 42°C, 40°C, 38°C, 36°C, 34°C, 32°C, 30°C, 28°C, 26°C, 24°C, 22°C, or 20°C or so. The absolute value may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. When there are pluralities of amorphous polar phase change materials and the second phase change materials, respectively, the absolute value may be the difference between the lowest melting point among the melting points of the amorphous polar phase change materials and the highest melting point among the melting points of the second phase change materials, or the difference between the highest melting point among the melting points of the amorphous polar phase change materials and the lowest melting point among the melting points of the second phase change materials. In the above case, the second phase change material may have a lower melting point or a higher melting point relative to the amorphous polar phase change material.

For example, when included, the absolute value of the difference between the latent heat zone initiation temperature of the amorphous polar phase change material and the latent heat zone initiation temperature of the second phase change material may be adjusted. The lower limit of the absolute value may be 5°C, 7°C, 9°C, 11°C, 13°C, 15°C, 17°C, 19°C, 21°C, 23°C, or 25°C or so, and the upper limit thereof may be 60°C, 48°C, 46°C, 44°C, 42°C, 40°C, 38°C, 36°C, 34°C, 32°C, 30°C, 28°C, 26°C, 24°C, 22°C, or 20°C or so. The absolute value may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. When there are pluralities of the amorphous polar phase change materials and the second phase change materials, respectively, the absolute value may be the difference between the lowest latent heat zone initiation temperature among the latent heat zone initiation temperatures of the amorphous polar phase change materials and the highest latent heat zone initiation temperature among the latent heat zone initiation temperatures of the second phase change materials, or the

difference between the highest latent heat zone initiation temperature among the latent heat zone initiation temperatures of the amorphous polar phase change materials and the lowest latent heat zone initiation temperature of the latent heat zone initiation temperatures of the second phase change materials. In the above case, the second phase change material may have a lower latent heat zone initiation temperature or a higher latent heat zone initiation temperature relative to the amorphous polar phase change material.

The second phase change material is not included in the curable composition, or when it is included therein, the content thereof may be controlled in consideration of the formation efficiency of the semi-IPN. For example, the lower limit of the content of the second phase change material relative to 100 parts by weight of the crystalline polar phase change material may be 10 parts by weight, 15 parts by weight, 20 parts by weight, 25 parts by weight, 30 parts by weight, 35 parts by weight, 40 parts by weight, 45 parts by weight, or about 50 parts by weight or so, and the upper limit thereof may be 100 parts by weight, 90 parts by weight, 80 parts by weight, 70 parts by weight, 60 parts by weight, or 55 parts by weight or so. The content may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. When the second phase change material is included within this range, it is possible to adjust the endothermic properties of the cured product to a desired level without inhibiting the formation of the semi-IPN.

The curable composition may comprise a filler, for example, a thermally conductive filler, as an optional component. As such a filler efficiently transfers heat generated from components to the phase change material, whereby it is possible to stably secure desired endothermic properties.

The thermally conductive filler is not particularly limited, and for example, a metal hydroxide exemplified by aluminum hydroxide ($Al(OH)_3$), magnesium hydroxide ($Mg(OH)_2$), calcium hydroxide ($Ca(OH)_2$), boehmite (AlOOH) and hydromagnesite, a metal oxide exemplified by zinc oxide (ZnO), beryllium oxide (BeO), magnesia and alumina ($Al_2O_3$), a nitride exemplified by aluminum nitride (AlN), boron nitride (BN) and silicon nitride ($Si_3N_4$), and an inorganic filler such as silicon carbide (SiC) may be used, without being limited thereto. One, or two or more may be selected from the above fillers. In the case of forming a low-density cured product, a filler having a low specific gravity may be selected from the filler components, and for example, a metal hydroxide exemplified by aluminum hydroxide and the like may be selected.

The shape of the filler is not particularly limited, and, for example, spherical, needle-shaped, plate-shaped, or other amorphous fillers may be used.

In one example, as the filler, a filler having an average particle diameter in a range of 10 μm to 200 μm may be used. The average particle diameter is a D50 particle diameter measured in the manner described in Examples to be described below. Through the application of the filler having such a particle diameter, it is possible to secure the desired effect more efficiently.

In another example, the average particle diameter of the filler may be 15 μm or more, 20 μm or more, 25 μm or more, 30 μm or more, 35 μm or more, or 40 μm or more, or may also be 180 μm or less, 160 μm or less, 140 μm or less, 120 μm or less, 100 μm or less, 80 μm or less, 60 μm or less, or 50 μm or less or so.

The content of the thermally conductive filler in the curable composition is adjusted according to the purpose. For example, the curable composition may comprise the thermally conductive filler in an amount of 50 to 200 parts by weight relative to 100 parts by weight of the resin component. In another example, the curable composition may comprise the thermally conductive filler in an amount of 60 parts by weight or more, 65 parts by weight or more, 70 parts by weight or more, 75 parts by weight or more, 80 parts by weight or more, 85 parts by weight or more, 90 parts by weight or more, or 95 parts by weight or more, or 190 parts by weight or less, 180 parts by weight or less, 170 parts by weight or less, 160 parts by weight or less, 150 parts by weight or less, 140 parts by weight or less, 130 parts by weight or less, 120 parts by weight or less, or 110 parts by weight or less, relative to 100 parts by weight of the resin component.

The curable composition according to one example of the present application may comprise other necessary components required in addition to the above components. For example, the curable composition may further comprise additional additives, for example, a catalyst, a pigment or dye, a dispersant, a thixotropy imparting agent, a flame retardant, and the like, if necessary, in addition to the above components.

Such a curable composition may be a solvent-based composition, an aqueous composition, or a solventless composition, and may suitably be a solventless composition.

As described above, the curable composition may be a one-component composition or a two-component composition, and in some cases, it may be a main agent or curing agent part of the two-component composition, or a mixture of the main agent and curing agent parts.

When the curable composition is a two-component composition, the ratios of other components in the main agent and curing agent parts other than the curable resin component is not particularly limited. For example, the phase change material and/or the filler may be included in both the main agent and curing agent parts, or may be included in the main agent and curing agent parts separately.

The curable composition of the present application is suitably used for various applications, and particularly, it

is applied to a heating product, whereby it can be used as a material for controlling heat of the product.

The present application also relates to a method for manufacturing a cured product having the semi-IPN and exhibiting the endothermic properties.

The manufacturing method may comprise a step of curing the above-described curable composition.

In this process, the curing temperature may be controlled to effectively form the above-described semi-IPN. For example, the curing temperature may be adjusted in relation to the melting point of the polar crystalline phase change material included in the curable composition. That is, the phase change material may exhibit fluidity capable of forming the semi-IPN under the adjusted temperature. For example, the lower limit of the absolute value of the difference between the curing temperature (Tc) and the melting point (Tm) of the polar crystalline phase change material may be 0°C, 0.5°C, 1°C, 1.5°C, 2°C, or 2.5°C or so, and the upper limit thereof may be 20°C, 18°C, 16°C, 14°C, 12°C, 10°C, 8°C, 6°C, 5°C, or 4°C or so. In relation to the absolute value of the curing temperature and the melting point, when the curable composition comprises a plurality of amorphous polar phase change materials, the melting point may be the melting point of the phase change material exhibiting the highest melting point among the plurality of polar phase change materials. The absolute value of the difference between the curing temperature and the melting point may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

Even when the composition is not a thermosetting composition, that is, a curable composition of a type that is cured by application of heat, the curing may be performed at the curing temperature. For example, even when the curable composition is an energy beam curing type or a room temperature curing type, and the like, the curing temperature (Tc) may be adjusted as described above, and the semi-IPN may be formed at this temperature.

If it represents the difference from the melting point Tm of the crystalline phase change material, the curing temperature Tc may be higher or lower relative to the melting point Tm.

In one example, the lower limit of the curing temperature Tc may be 40°C, or 50°C or so, and the upper limit thereof may be 80°C, or 70°C or so. The curing temperature Tc may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits.

Within this range, the curable composition can be formed into a cured product having the desired leakage prevention of the phase change material, the securing of the appropriate hardness, the securing of the appropriate elasticity and viscosity, and excellent flame-retardant performance, and the like.

In order to prepare the curable composition, the manufacturing method may further comprise a step of mixing the resin component and the phase change material.

In this process, the mixing temperature may be controlled to effectively form the above-described semi-IPN. For example, the mixing temperature (Tx) may be adjusted in relation to the melting point (Tm) of the polar crystalline phase change material included in the curable composition. That is, the phase change material may exhibit fluidity capable of forming the semi-IPN under the adjusted temperature. For example, the lower limit of the absolute value of the difference between the mixing temperature (Tx) and the melting point (Tm) of the polar crystalline phase change material may be 0°C, 0.5°C, 1°C, 1.5°C, 2°C, 2.5°C, 3°C, 3.5°C, 4°C, 4.5°C, 5°C, 5.5°C, 6°C, 6.5°C, or 7°C or so, and the upper limit thereof may be 20°C, 18°C, 16°C, 14°C, 12°C, 10°C, 8°C, 6°C, 5°C, or 4°C or so. In relation to the absolute value of the mixing temperature and the melting point, when the curable composition comprises a plurality of amorphous polar phase change materials, the melting point may be the melting point of the phase change material exhibiting the highest melting point among the plurality of polar phase change materials. The absolute value of the difference between the mixing temperature and the melting point may be more than or equal to, or more than any one of the above-described lower limits, or may be less than or equal to, or less than any one of the above-described upper limits, or may be in a range of less than or equal to, or less than any one of the above-described upper limits while being more than or equal to, or more than any one of the above-described lower limits. Through the mixing within this range, the phase change material may exhibit fluidity suitable for formation of the desired semi-IPN.

Here, the crystalline polar phase change material having a melting point based on the difference from the curing temperature and/or the mixing temperature may be a phase change material having the linear structure and number average molecular weight as described above.

Such a phase change material may be mixed in a molten state when mixed with the resin component. For example, the phase change material may be maintained at a temperature of the melting point or more before mixing with the resin component to be sufficiently melted, and then mixed with the resin component. At this time, a method of melting the phase change material is not particularly limited, and for example, the phase change material may be melted by maintaining it at a temperature of the melting point of the phase change material or more. In one example, the holding temperature of the phase change material may be a temperature higher than the melting point of the phase change material by 10°C to 100°C or more. In another example, the temperature may be a temperature higher than the melting

point of the phase change material by 15°C or more, 20°C or more, 25°C or more, 30°C or more, 35°C or more, or 40°C or more, or a temperature lower than the melting point of the phase change material by 95°C or less, 90°C or less, 85°C or less, 80°C or less, 75°C or less, 70°C or less, 65°C or less, 60°C or less, 55°C or less, 50°C or less, 45°C or less, 40°C or less, 35°C or less, or 30°C or less.

By mixing the phase change material melted in this temperature range and the resin component to prepare the curable composition, it is possible to efficiently prepare the curable composition having the desired properties. Meanwhile, the temperature at the time of mixing the molten phase change material and the resin component may be a temperature within the same range as the temperature at which the phase change material is melted, or a temperature lower than that. In one example, the mixing may be performed at a temperature higher than the melting point of the phase change material by 10°C to 100°C or more. In another example, the temperature may be a temperature higher than the melting point of the phase change material by 15°C or more, 20°C or more, 25°C or more, 30°C or more, 35°C or more, or 40°C or more, or a temperature lower than the melting point of the phase change material by 95°C or less, 90°C or less, 85°C or less, 80°C or less, 75°C or less, 70°C or less, 65°C or less, 60°C or less, 55°C or less, 50°C or less, 45°C or less, 40°C or less, 35°C or less, or 30°C or less. Specifically, when the phase change material and the resin component are mixed, the temperature upon mixing may be about 40°C or more, 45°C or more, 50°C or more, 55°C or more, or 60°C or more, or may be 150°C or less, 140°C or less, 130°C or less, 120°C or less, 110°C or less, 100°C or less, 90°C or less, 80°C or less, or 70°C or less.

As the curable composition thus prepared is cured in the above manner, it has excellent flame retardancy as well as Shore A hardness and Tanδ within the desired range, whereby it is possible to manufacture a cured product having excellent vibration resistance and impact resistance.

The cured product may be obtained by curing the curable composition according to one example of the present application. A method for curing the curable composition to obtain a cured product is not limited, and an appropriate curing method is applied according to the type of the curable composition. For example, a method of irradiating the composition with energy beams such as ultraviolet rays in the case of the energy beam curing type, a method of maintaining the composition under appropriate moisture in the case of the moisture curing type, a method of applying appropriate heat to the composition in the case of the thermal curing type, a method of maintaining the composition at room temperature in the case of the room temperature curing type, a method of applying two or more curing methods in the case of the hybrid curing type, and the like may be used. As described above, in a suitable example, the curable composition may be of the thermal curing type. However, the curing may be performed at a temperature showing the difference between the curing temperature Tc and the melting point Tm as described above.

A product according to one example of the present application may comprise the above-described curable composition, or the cured product of the curable composition. The curable composition according to one example of the present application, or the cured product of the curable composition may be usefully applied as a material for controlling heat of a heat-producing component, a heating element, or a heating product. Therefore, the product may comprise a heat-producing component or a heating element or a heating product. The term heat-producing component, element or product means a component, element or product that generates heat during use, and the type thereof is not particularly limited. Representative heat-producing components, elements, or products include various electric/electronic products comprising battery cells, battery modules, or battery packs, and the like.

The product according to one example of the present application may comprise, for example, the heat-producing component, element, or product, and the curable composition (or two-component composition) or the cured product of the curable composition existing adjacent to the heat-producing component and the like. In this case, as described above, the heat-producing component, element or product may be a component, element or product having an appropriate driving temperature in the range of approximately 15°C to 60°C. That is, the curable composition of the present application is useful for being disposed adjacent to the heat-producing component, element, or product to uniformly maintain the driving temperature of the product within the above range.

The specific method of constituting the product according to one example of the present application is not particularly limited, and if the curable composition of the present application or the cured product of the curable composition is applied as a heat dissipation material, the product may be configured in various known methods.

In one example, the curable composition may be used as a potting material upon constructing a battery module or battery pack. The potting material may be a material covering at least a part of or all the plurality of unit battery cells in a battery module or a battery pack while being in contact with the same. When the curable composition of the present application or the cured product of the curable composition has been applied as the potting material, it can control heat generated in the battery cells of the battery module or pack, can prevent chain ignition or explosion, and the like, and can uniformly maintain the driving temperature of the module, pack, or battery cells. In the present application, it is possible to provide a curable composition that has excellent potting efficiency because viscosity or thixotropy is controlled to an appropriate level before curing, and forms a stable potting structure without generating unnecessary bubbles after curing. In the present application, it is possible to provide a curable composition capable of providing a battery module or pack having high power while being lightweight compared to the volume by showing a low density after curing. In the

present application, it is also possible to provide a curable composition having excellent required physical properties including insulation and the like.

In this case, regarding a battery-related technology, the curable composition may be applied as a heat dissipation material of a battery module or a battery pack, and the like, or a heat dissipation material of an OBC (on-board charger) for a vehicle. Therefore, the present application may also relate to a battery module, battery pack, or on-board charger (OBC) comprising the curable composition or the cured product of the curable composition as the heat dissipation material. In the battery module, battery pack, or on-board charger, the application position or application method of the curable composition or the cured product of the curable composition is not particularly limited, and a known method may be applied. In addition, the curable composition of the present application is not limited to the above use, which can be effectively applied to various uses requiring excellent heat dissipation properties, storage stability and adhesion force.

In another example related to the present application, the present application may relate to an electronic apparatus or device having the cured product of the curable composition.

The type of electronic apparatus or device is not particularly limited, which may be exemplified by, for example, an AVN (audio video navigation) for a vehicle, or an OBC (on-board charger) module for an electric vehicle, an LED module or IC chip, and a computer or mobile device comprising the same.

The cured product of the curable composition may radiate heat within the apparatus or device, and may impart durability against impact, insulation, and the like. In one example, the curable composition may be used as a battery potting material.

In a battery module according to one example of the present application, the above-described potting material is applied thereto. Such a battery module can exhibit high power while being lightweight, where heat generated from battery cells, and the like is appropriately controlled, and can also prevent problems such as chain ignition from occurring.

In one example, the battery module may comprise a substrate; a plurality of battery cells disposed on the substrate; and the curable composition or the cured product of the curable composition covering at least a part of or all the plurality of battery cells.

In the above structure, in one example, the curable composition or the cured product of the curable composition (potting material) may cover the battery cells while being in contact with the whole surface of the plurality of battery cells (except for the surface of the battery cells in contact with the substrate side) (structure of Figure 1), or may be in contact only with upper portions of the plurality of battery cells (structure of Figure 2).

Figures 1 and 2 are schematic diagrams of such battery module structures, and are views showing structures comprising a substrate (10); battery cells (20) and the potting material (30, the curable composition or the cured product thereof). The battery module may further comprise an adhesive material (40) for fixing the battery cells (20) to the substrate (10), and in one example, the adhesive material (40) may be configured to have thermal conductivity.

If the curable composition or the cured product thereof is applied as a potting material, the specific configuration of the battery module, for example, the types of the battery cell, the substrate, and/or the adhesive material are not particularly limited, and known materials may be applied.

For example, known pouch type, rectangular or cylindrical battery cells may be applied as the battery cells, and a known material may also be applied as the substrate or adhesive material.

The manufacturing method of the battery module is not particularly limited, and for example, it may be formed through steps of pouring the curable composition onto the upper portions of a plurality of battery cells formed on a substrate, and curing it if necessary.

Since the curable composition according to one example of the present application has appropriate viscosity and thixotropy, it can efficiently fill between battery cells disposed very adjacently, and can exhibit desired thermal insulation properties and heat shielding properties, and the like after forming a potting material.

## Advantageous Effects

The present application can provide a curable composition and a use thereof. The present application can provide a curable composition, which is applied to a product or an element that generates heat during driving, storage and/or maintenance, or has possibilities of ignition or explosion, capable of effectively responding to the heat, ignition, and explosion. For example, the composition of the present application is applied to an article comprising a plurality of products or elements as described above, thereby being capable of responding to abnormal heat generation, explosion, and ignition occurring in any one element or product, and preventing or minimizing propagation of such heat generation, explosion, and ignition to other adjacent elements or products. Also, the present application can provide the curable composition to ensure excellent handling properties, storage stability and flame retardancy. In addition, the curable composition or the cured product of the present application can stably maintain the above characteristics for a long period of time while achieving the above characteristics by using a non-capsulated phase change material.

**Description of Drawings**

Figures 1 and 2 are schematic diagrams of exemplary battery modules of the present application.

Figure 3 is a DSC analysis result of the cured product of Example 1.

Figure 4 is a DSC analysis result of the cured product of Example 2.

Figure 5 is a DSC analysis result of the cured product of Example 3.

Figure 6 is a DSC analysis result of the cured product of Example 4.

Figure 7 is a DSC analysis result of the cured product of Comparative Example 2.

Figure 8 is a DSC analysis result of the cured product of Comparative Example 4.

Figure 9 is a DSC analysis result of the cured product of Comparative Example 5.

Figure 10 is a DSC analysis result of the cured product of Comparative Example 6.

**Mode for Invention**

Hereinafter, the present invention will be described through examples and comparative examples, but the scope of the present invention is not limited due to the contents presented below.

**1. Measurement of latent heat**

The latent heat was evaluated in the following manner. About 3 to 5 mg or so of a sample (cured product or PCM (Phase Change Material)) was loaded into a DSC (Differential Scanning Calorimeter) equipment (TA instrument, Q200 model). After setting the temperature zone of the equipment for evaluation of the latent heat from -20°C to 200°C, the endothermic zone was measured while the temperature was raised at a rate of about 10°C/min, and the endothermic peak identified in the endothermic zone was integrated to calculate the latent heat (unit: J/g). The temperature at the inflection point from the left onset of the endothermic peak was the latent heat zone start temperature (left on-set temperature), and the temperature at the inflection point from the right onset point was the latent heat zone end temperature (rightt on-set temperature), where the width of the latent heat zone was a value obtained by subtracting the on-set temperature from the off-set temperature. The melting point of PCM was defined as the temperature at the apex of the endothermic peak.

**2. Measurement of leakage rate**

Specimens were prepared by cutting the cured bodies obtained in Examples or Comparative Examples to have a width of 1 cm or so, a length of 1 cm or so, and a thickness of 0.8 cm or so. Four specimens were prepared for each cured product. The initial weights ($m_1$) of the specimens are measured to record the average of the four specimens. Then, the respective specimens whose initial weights are measured are placed on filter paper, left in a chamber at 80°C for about 24 hours, and then the weights ($m_2$) are measured to record the average of the four specimens. Subsequently, the leakage rate ($L_R$) is calculated according to Equation A below.

[Equation A]

$$L_R = 100\times(m_1-m_2)/m_1$$

**3. Measurement of mass loss**

Specimens are prepared by cutting the cured bodies of Examples or Comparative Examples to have a width of 1 cm or so, a length of 1 cm or so, and a thickness of 0.3 cm or so. The initial weights ($m_3$) of the specimens are

measured and then recorded. Subsequently, the specimens whose initial weights are measured are put into distilled water, maintained at room temperature (about 25°C) for about 4 days, and then taken out, and the weights ($m_4$) are measured. The weight m4 is the weight of the specimen measured after removing moisture from the specimen taken out of the distilled water. The removal of the moisture is performed by a method of wiping the moisture on the surface of the specimen with absorbent cotton. The mass loss ($M_L$) is measured according to Equation B below.

[Equation B]

$$M_L = 100\times(m_3-m_4)/(m_3\times m_5)$$

In Equation B, $m_5$ is the weight% of PCM included in the cured product of the specimen, which means the weight% of PCM included in the cured product relative to the total weight of the cured product.

### 4. Shore A hardness

The Shore A hardness of each cured product of Examples or Comparative Examples is measured according to ASTM D2240 standard. An ASKER Durometer instrument is used for hardness measurement. A load of about 1.5 kg or so is applied to the surface of a flat cured product (specimen), and after 15 seconds, the stabilized value is confirmed to measure the hardness.

### 5. Tanδ measurement method

Specimens are prepared by cutting the cured bodies of Examples or Comparative Examples to have a width of 8 mm or so, a length of 8 mm or so, and a thickness of 3 mm or so. They are loaded on ARES G2 (TA instrument, 8 mm aluminum plate, 25°C Frequency sweep), which is a rotational rheometer, and storage elastic moduli (G') at room temperature (about 25°C) are measured under the condition of 5% strain and 0.95 Hz, and loss elastic moduli (G") at room temperature (about 25°C) are measured under the condition of 5% strain and 0.95 Hz.

Tanδ is defined according to Equation C below.

[Equation C]

$$\tan\delta = G''/G'$$

### 6. Flame retardancy evaluation

Specimens are prepared by cutting the cured bodies of Examples or Comparative Examples to have a width of 13 mm or so, a length of 125 mm or so, and a thickness of 2 mm or so, and flame retardancy is measured according to UL94V standard. If the measurement result is a V-0 or V-1 grade, it is evaluated as P (PASS), and other grades are evaluated as NG.

### 7. GPC (Gel Permeation Chromatograph)

Molecular weight properties are measured using GPC (gel permeation chromatography). An analyte material is placed in a 5 mL vial, and diluted in toluene to a concentration of about 5 mg/mL or so. Thereafter, the standard sample for calibration and the material to be analyzed are filtered through a syringe filter (pore size: 0.45 μm), and then they are measured. As the analysis program, Agilent Technologies' ChemStation is used, and the weight average molecular weight (Mw) and number average molecular weight (Mn) may each be obtained by comparing the elution time of the sample with the calibration curve.

The measurement conditions of GPC are as follows.

<GPC measurement conditions>

Instrument: Agilent technologies' 1200 series

Column: using 2 PLgel mixed B from Polymer laboratories

Solvent: toluene

Column temperature: 40°C

Sample concentration: 5mg/mL, 10μL injection

Standard sample: polystyrene (Mp: 3900000, 723000, 316500, 52200, 31400, 7200, 3940, 485)

**6. Particle diameter analysis of filler**

The particle diameter of the filler was measured using Marven's MASTERSIZER 3000 equipment in accordance with ISO-13320, and ethanol was used as a solvent upon the measurement. As the particle diameter of the filler, the D50 particle diameter was measured, which was taken as the average particle diameter. The D50 particle diameter is the particle diameter (median diameter) at 50% cumulative by volume of the particle size distribution, which is the particle diameter at the point where the cumulative value becomes 50% on the cumulative curve with the total volume as 100%, after obtaining the particle size distribution based on the volume.

**Example 1.**

Using a silicone resin component (SL3000, KCC) (weight average molecular weight: about 28,000 g/mol) as a curable resin component, a main agent part and a curing agent part were each prepared in the following manner to prepare a two-component curable composition.

Main agent part

The main agent (S) of the curable resin component, a PCM (Phase Change Material) (P) and a filler (F) were mixed in a weight ratio of 100:91.7:92.6 (S: P: F), and stirred at 70°C and at 380 rpm for 60 minutes to prepare the main agent part. As the PCM, PEG (poly(ethylene glycol)) (PEG4000, Sigma Aldrich) was used, and the PCM was maintained at a temperature of about 80°C for 1 hour to be completely melted, and then used in the manufacture of the main agent part. As the filler, aluminum hydroxide ($Al(OH)_3$) having an average particle diameter of about 50 μm or so was used.

The PEG had a number average molecular weight (Mn) of about 4,000 g/mol or so, a melting point (Tm) of about 62.77°C or so according to a DSC (Differential Scanning Calorimeter) analysis, a latent heat of about 164.3 J/g or so, a latent heat zone start temperature of about 56.47°C or so, a latent heat zone end temperature of about 66.14°C or so, and thus a latent heat zone width of about 9.67°C or so.

Curing agent part

The curing agent (C) of the curable resin component, a PCM (Phase Change Material) (P), and a filler (F) were mixed in a weight ratio of 100:91.7:92.6 (C: P: F), and stirred at 70°C and at 380 rpm for 60 minutes to prepare the curing agent part. As the PCM and the filler, the same ones as in the main agent part were used. In addition, the PCM was maintained at a temperature of about 80°C for 1 hour to be completely melted, and then used.

Cured product

The main agent part and the curing agent part were put in a bath in a weight ratio of 1:1, and stirred at 70°C and at about 380 rpm for about 60 minutes to be uniformly mixed, thereby preparing a curable composition. The curable composition was maintained in a chamber at 60°C for 1 hour or so, and then applied to an aluminum dish with an injector to have a thickness of about 10 mm or so, and maintained at about 60°C for about 30 minutes to manufacture a cured product.

**Example 2.**

Main agent part

The main agent (S) of the same curable resin component (SL3000, KCC) as in Example 1, a PCM (Phase Change Material) (P) and a filler (F) were mixed in a weight ratio of 100:132:106 (S: P: F), and stirred at 70°C and at

380 rpm for 60 minutes to prepare the main agent part. The PCM was maintained at a temperature of about 80°C for 1 hour to be completely melted, and then used in the manufacture of the main agent part.

As the PCM, the same PEG as applied in Example 1 and docosane (D, n-decosane) and eicosane (E, n-eiocosane) were mixed in a weight ratio of 87.5:33.4:11.1 (PEG: D: E) and used, and as the filler, the same aluminum hydroxide ($Al(OH)_3$) as in Example 1 was used.

The docosane had a melting point (Tm) of 44°C or so as measured by a DSC (Differential Scanning Calorimeter) analysis, a latent heat of about 170 J/g or so, a latent heat zone start temperature of about 41.53°C or so, and a latent heat zone end temperature of about 46.99°C or so. The eicosane had a melting point (Tm) of 36°C or so as measured by a DSC (Differential Scanning Calorimeter) analysis, a latent heat of about 152 J/g or so, a latent heat zone start temperature of about 31.79°C, and a latent heat zone end temperature of about 38.96°C or so.

Curing agent part

The curing agent (C) of the same curable resin component (SL3000, KCC) as in Example 1, a PCM (Phase Change Material) (P) and a filler (F) were mixed in a weight ratio of 100:132:106 (C: P: F), and stirred at 70°C and at 380 rpm for 60 minutes to prepare the curing agent part. As the PCM and the filler, the same ones as in the main agent part of Example 2 were used. In addition, the PCM was maintained at a temperature of about 80°C for 1 hour to be completely melted, and then used.

Cured product

A cured product was manufactured in the same manner as in Example 1 using the main agent part and the curing agent part.

**Example 3.**

Main agent part

The main agent (S) of the curable resin component (SL3000, KCC) of Example 1 and a PCM (Phase Change Material) (P) were mixed in a weight ratio of 100:61.3 (S: P), and stirred at 70°C and at 380 rpm for 60 minutes to prepare the main agent part. As the PCM, the same PEG (poly(ethylene glycol) (PEG4000, Sigma Aldrich) as in Example 1 was used, and the PCM was maintained at a temperature of about 80°C for 1 hour to be completely melted, and then used in the manufacture of the main agent part.

Curing agent part

The curing agent (C) of the curable resin component (SL3000, KCC), and a PCM (Phase Change Material) (P) were mixed in a weight ratio of 100:61.3 (C: P), and stirred at 70°C and at 380 rpm for 60 minutes to prepare the curing agent part. As the PCM, the same one as in the main agent part was used. In addition, the PCM was maintained at a temperature of about 80°C for 1 hour to be completely melted, and the used.

Cured product

A cured product was prepared in the same manner as in Example 1 using the main agent part and the curing agent part.

**Example 4.**

Using a urethane resin component (KC-315A/KC-315B, Gangnam Hwaseong) (weight average molecular weight: about 2,500 g/mol) as a curable resin component, a main agent part and a curing agent part were each prepared in the following manner to prepare a two-component curable composition.

Main agent part

The main agent (S) of the curable resin component, a PCM (Phase Change Material) and a filler (F) were mixed in a weight ratio of 100:95:95 (S: P: F), and stirred at 70°C and at 380 rpm for 60 minutes to prepare the main agent part. As the PCM and the filler, the same ones as in Example 1 were used, and the PCM was maintained at a temperature of about 80°C for 1 hour to be completely melted, and then used in the manufacture of the main agent part.

Curing agent part

The curing agent (C) of the curable resin component, a PCM (Phase Change Material) and a filler (F) were mixed in a weight ratio of 100:95:95 (C: P: F), and stirred at 70°C and at 380 rpm for 60 minutes to prepare the main agent part. As the PCM and the filler, the same ones as in Example 1 were used, and the PCM was maintained at a temperature of about 80°C for 1 hour to be completely melted, and then used in the manufacture of the main agent part.

Cured product

A cured product was prepared in the same manner as in Example 1 using the main agent part and the curing agent part.

**Comparative Example 1.**

The main agent and the curing agent of the same silicone resin component (SL3000, KCC) as that used in Example 1 were mixed, and a cured product was manufactured in the same manner as in Example 1, except that PCM and filler were not applied.

**Comparative Example 2.**

Main agent part

The main agent (S) of the curable resin component (SL3000, KCC) of Example 1, and a PCM (Phase Change Material) (P) were mixed in a weight ratio of 100:62.6 (S: P), and stirred at 70°C and at 380 rpm for 60 minutes to prepare the main agent part. As the PCM, n-docosane used in Example 2 was used, and the PCM was maintained at a temperature of about 80°C for 1 hour to be completely melted, and then used in the manufacture of the main agent part.

Curing agent part

The curing agent (C) of the curable resin component (SL3000, KCC) and a PCM (Phase Change Material) (P) were mixed in a weight ratio of 100:62.6 (C: P), and stirred at 70°C and at 380 rpm for 60 minutes to prepare the curing agent part. As the PCM, the same n-docosane as in the main agent part was used. In addition, the PCM was maintained at a temperature of about 80°C for 1 hour to be completely melted, and then used.

Cured product

A cured product was prepared in the same manner as in Example 1 using the main agent part and the curing agent part.

**Comparative Example 3.**

Main agent part

The main agent (S) of the curable resin component (SL3000, KCC) used in Example 1, a PCM (Phase Change Material) (P) and a filler (F) were mixed in a weight ratio of 100:184:92.5 (S: P: F), and stirred at 70°C and at 380 rpm for 60 minutes. As the PCM and filler, the same ones as in Example 1 were used, respectively, and the PCM was maintained at a temperature of about 80°C for 1 hour to be completely melted, and then applied to the mixing and stirring.

Curing agent part

The curing agent (C) of the curable resin component, a PCM (Phase Change Material) (P) and a filler (F) were mixed in a weight ratio of 100: 184:92.5 (C: P: F), and stirred at 70°C and at 380 rpm for 60 minutes. As the PCM and filler, the same ones as in Example 1 were used, respectively, and the PCM was maintained at a temperature of about 80°C for 1 hour to be completely melted, and then applied to the mixing and stirring. However, in this case, due to excessive increase in the viscosity of the curing agent part, nonuniform mixing of the components occurred severely to the extent that it was observed with the naked eye, and mixing was impossible, thereby making it impossible to prepare the curing agent part.

**Comparative Example 4.**

Main agent part

The main agent (S) of the same curable resin component (SL3000, KCC) as in Example 1, a PCM (Phase Change Material) (P) and a filler (F) were mixed in a weight ratio of 100:132:106 (S: P: F), and stirred at room temperature (about 25°C) and at 380 rpm for 60 minutes to prepare the main agent part.

As the PCM, the same PEG as applied in Example 1 and docosane (D, n-decosane) and eicosane (E, n-eiocosane) were mixed in a weight ratio of 87.5:33.4:11.1 (PEG: D: E) and used, and as the filler, the same aluminum hydroxide ($Al(OH)_3$) as in Example 1 was used. As the docosane and eicosane, the same ones as in Example 2 were used.

Curing agent part

The curing agent (C) of the same curable resin component (SL3000, KCC) as in Example 1, a PCM (Phase Change Material) (P) and a filler (F) were mixed in a weight ratio of 100:132:106 (C: P: F), and stirred at room temperature (about 25°C) and at 380 rpm for 60 minutes to prepare the curing agent part. As the PCM and the filler, the same ones as the main agent part of Example 2 were used.

Cured product

The main agent part and the curing agent part were put in a bath in a weight ratio of 1:1, and stirred at about 380 rpm for about 60 minutes to be uniformly mixed, thereby preparing a curable composition. The curable composition was applied to an aluminum dish with an injector to have a thickness of about 10 mm or so, and maintained at room temperature (about 25°C) to manufacture a cured product.

**Comparative Example 5.**

Main agent part

The main agent (S) of the curable resin component (SL3000, KCC) of Example 1, a PCM (Phase Change Material) (P) and a filler (F) were mixed in a weight ratio of 100:31.4:73.9 (S: P: F), and stirred at 70°C and at 380 rpm for 60 minutes to prepare the main agent part. As the PCM, one that n-docosane (D) and eicosane (E) used in Example 2 were mixed in a weight ratio (D: E) of 23.4:8.0 was used, and the PCM was maintained at a temperature of about 80°C for 1 hour to be completely melted, and then used in the manufacture of the main agent part.

Curing agent part

The curing agent (C) of the curable resin component (SL3000, KCC), a PCM (Phase Change Material) (P) and filler (F) were mixed in a weight ratio of 100:31.4:73.9 (C: P: F), and stirred at 70°C and at 380 rpm for 60 minutes to prepare the curing agent part. As the PCM, one that n-docosane (D) and eicosane (E) used in Example 2 were mixed in a weight ratio (D: E) of 23.4:8.0 was used, and the PCM was maintained at a temperature of about 80°C for 1 hour to be completely melted, and then used.

Cured product

A cured product was prepared in the same manner as in Example 1 using the main agent part and the curing agent part.

**Comparative Example 6.**

Main agent part

The main agent (S) of the curable resin component (SL3000, KCC) of Example 1, a PCM (Phase Change Material) (P) and a filler (F) were mixed in a weight ratio of 100:91.7:92.6 (S: P: F), and stirred at 70°C and at 380 rpm for 60 minutes to prepare the main agent part. As the PCM, PEG (poly(ethylene glycol)) (PEG400, Sigma Aldrich) was used, and the PCM was maintained at a temperature of about 80°C for 1 hour to be completely melted, and then used in the manufacture of the main agent part. As the filler, the same aluminum hydroxide ($Al(OH)_3$) as in Example 1 was used.

The PEG had a number average molecular weight (Mn) of about 400 g/mol or so, a melting point (Tm) of about

5.1°C or so according to a DSC (Differential Scanning Calorimeter) analysis, a latent heat of about 116.2 J/g or so, a latent heat zone start temperature of about -9.8°C or so, and a latent heat zone end temperature of about 6.3°C or so.

Curing agent part

The curing agent (C) of the curable resin component (SL3000, KCC), a PCM (Phase Change Material) (P) and a filler (F) were mixed in a weight ratio of 100:91.7:92.6 (C: P: F), and stirred at 70°C and at 380 rpm for 60 minutes to prepare the curing agent part. As the PCM and the filler, the same ones as in the main agent part were used. In addition, the PCM was maintained at a temperature of about 80°C for 1 hour to be completely melted, and then used.

Cured product

A cured product was prepared in the same manner as in Example 1 using the main agent part and the curing agent part.

**Comparative Example 7.**

Main agent part

The main agent (S) of the curable resin component (SL3000, KCC) of Example 1, a PCM (Phase Change Material) (P) and a filler (F) were mixed in a weight ratio of 100:91.7:92.6 (S: P: F), and stirred at 70°C and at 380 rpm for 60 minutes to prepare the main agent part. As the PCM, PPG (polypropylene glycol)) (PPG4000, Sigma Aldrich) was used, and the PCM was maintained at a temperature of about 80°C for 1 hour to be completely melted, and then used in the manufacture of the main agent part. As the filler, the same aluminum hydroxide ($Al(OH)_3$) as in Example 1 was used.

The PPG had a number average molecular weight (Mn) of about 4.000 g/mol or so. However, it could be known that the PPG was amorphous because the melting point was not confirmed in the DSC (Differential Scanning Calorimeter) analysis. In addition, the latent heat and the latent heat zone were not observed for the PPG.

Curing agent part

The curing agent (C) of the curable resin component (SL3000, KCC), a PCM (Phase Change Material) (P) and a filler (F) were mixed in a weight ratio of 100:91.7:92.6 (C: P: F), and stirred at 70°C and at 380 rpm for 60 minutes to prepare the curing agent part. As the PCM and the filler, the same ones as in the main agent part were used. In addition, the PCM was maintained at a temperature of about 80°C for 1 hour to be completely melted, and then used.

Cured product

A cured product was prepared in the same manner as in Example 1 using the main agent part and the curing agent part.

Evaluation results for Examples and Comparative Examples were summarized in Tables 1 and 2 below. Meanwhile, Figures 3 to 10 are DSC analysis results of the cured bodies of Examples 1 to 4 and Comparative Examples 2 and 4 to 7, respectively. The DSC analysis results of Comparative Example 1, which did not contain any PCM, and Comparative Example 3, in which any cured product could not be produced due to formulation inability, were excluded.

In Tables 1 and 2 below, the left onset temperature is the latent heat zone start temperature, the right onset temperature is the latent heat zone end temperature, and G' is the storage elastic modulus.

[Table 1]

| | Example | | | |
|---|---|---|---|---|
| | 1 | 2 | 3 | 4 |
| Latent heat (J/g) | 51.3 | 62.28 | 62.4 | 52.5 |
| Left onset temperature | 56.24°C | 24.00°C | 50.72°C | 41.03°C |
| Right onset temperature | 62.64°C | 60.34°C | 57.08°C | 50.52°C |
| Latent heat zone width | 6.4°C | 36.34°C | 6.36°C | 9.49°C |
| $L_R$ (%) | 0.5 | 0.3 | 1 | 0.4 |

(continued)

| | | | | |
|---|---|---|---|---|
| $M_L$ (%) | 1.2 | 1.5 | 0.5 | 1.6 |
| Hardness (Shore A) | 9 | 8 | 6 | 8 |
| Tanδ | 0.23 | 0.43 | 0.33 | 0.28 |
| G' (Pa) | 315060 | 266086 | 278098 | 301750 |
| Flame-retardant grade | P, V0 | P, V0 | P, V1 | P, V1 |

[Table 2]

| | Comparative Example | | | | | | |
|---|---|---|---|---|---|---|---|
| | 1 | 2 | 3 | 4 | 5 | 6 | 7 |
| Latent heat (J/g) | - | 67.29 | - | 60.26 | 24.78 | 18.6 | - |
| Left onset temperature | - | 42.01°C | - | 22.06°C | 24.30°C | -6.73°C | - |
| Right onset temperature | - | 46.84°C | - | 61.89°C | 42.91°C | 7.54°C | - |
| Latent heat zone width | - | 4.83°C | - | 39.83°C | 18.61°C | 14.24°C | - |
| $L_R$ (%) | - | 14.5 | - | 0.3 | 1.6 | 16 | 1.1 |
| $M_L$ (%) | - | - | - | 18 | - | 24 | - |
| Hardness (Shore A) | 18 | 34 | - | 27 | 17 | 15 | 9 |
| Tanδ | 0.12 | 1.35 | - | 2.40 | 1.24 | 0.92 | 0.44 |
| G' (Pa) | 113052 | 119370 | - | 79595.2 | 132420 | 154706 | 234880 |
| Flame-retardant grade | P, V1 | NG | - | NG | P, V0 | NG | P, V1 |

## Claims

**1.** A curable composition, comprising:

a resin component, and
a phase change material,
wherein the curable composition is formulated to form a cured product which has an $L_R$ of the following Equation 1 in a range of 5% or less and a Shore A hardness in a range of 10 or less:

[Equation 1]

$$L_R = 100 \times (m_1-m_2)/m_1$$

wherein the $m_2$ is a weight of the cured product after maintaining the cured product at 80°C for 24 hours, and the $m_1$ is a weight of the cured product before maintaining the cured product at 80°C for 24 hours.

**2.** A curable composition, comprising:

a resin component, and
a phase change material,
wherein the curable composition is formulated to form a cured product which has a Tan δ of the following Equation 2 in a range of 0.15 to 2:

[Equation 2]

$$\mathrm{Tan}\delta = G''/G'$$

wherein the G' is a storage elastic modulus of the cured product at 25°C, and the G" is a loss elastic modulus of the cured product at 25°C.

3. The curable composition according to claim 1 or 2, wherein the cured product has a storage elastic modulus of 0.2 MPa or more at 25°C.

4. The curable composition according to any one of claims 1 to 3, wherein the resin component is a silicone resin component or a urethane resin component.

5. The curable composition according to any one of claims 1 to 4, wherein an amount of the resin component is from 30 to 80 weight%.

6. The curable composition according to any one of claims 1 to 5, wherein the phase change material comprises a polar crystalline phase change material.

7. The curable composition according to any one of claims 1 to 6, wherein the phase change material comprises a polyalcohol.

8. The curable composition according to any one of claims 1 to 7, wherein the phase change material comprises a polar phase change material having a linear structure and having a number average molecular weight in a range of 1,000 g/mol to 10,000 g/mol.

9. The curable composition according to any one of claims 1 to 8, wherein the phase change material comprises a polyalkylene glycol.

10. The curable composition according to claim 6 or 8, wherein the polar crystalline phase change material is comprised in an amount of 40 to 180 parts by weight relative to 100 parts by weight of the resin component.

11. The curable composition according to any one of claims 6 to 10, wherein the phase change material further comprises a non-polar phase change material.

12. The curable composition according to claim 11, wherein a difference between a melting point of the polar crystalline phase change material and a melting point of the non-polar phase change material is from 5°C to 50°C.

13. The curable composition according to claim 11 or 12, wherein the non-polar phase change material is comprised in an amount of 10 to 100 parts by weight relative to 100 parts by weight of the polar crystalline phase change material.

14. The curable composition according to any one of claims 1 to 13, wherein the cured product has an $M_L$ of Equation 3 below in a range of 5% or less:

[Equation 3]

$$M_L = 100\times(m_3-m_4)/(m_3\times m_5)$$

wherein the $m_4$ is a weight of the cured product as measured after immersing the cured product in water at 25°C for 96 hours, the $m_3$ is a weight of the cured product before immersing the cured product in water at 25°C for 96 hours, and the $m_5$ is a weight ratio of the phase change material included in the cured product having the weight of $m_3$.

15. A method for producing the cured product, comprising curing the curable composition comprising the resin component and the phase change material,
wherein the curable composition is the curable composition according to any one of claims 1 to 14.

**16.** The method for producing a cured product according to claim 15, wherein the phase change material comprises a polar crystalline phase change material, wherein the curing of the curable composition is performed at a curing temperature Tc, and wherein an absolute value of a difference between the curing temperature Tc and the melting point Tm of the polar crystalline phase change material is from 0°C to 20°C.

**17.** The method for producing a cured product according to claim 15 or 16, further comprising preparing the curable composition by mixing the resin component and the phase change material, wherein the phase change material comprises a polar crystalline phase change material, wherein the mixing is performed at a mixing temperature Tx, and wherein an absolute value of a difference between the mixing temperature Tx and a melting point Tm of the polar crystalline phase change material is from 0°C to 20°C.

**18.** The method for producing a cured product according to claim 17, wherein the resin component and the molten phase change material are mixed.

**19.** The method for producing a cured product according to any one of claims 16 to 18, wherein the polar crystalline phase change material has a linear structure and a number average molecular weight in a range of 1,000 g/mol to 10,000 g/mol.

**20.** A product, comprising:

a heating element; and
the cured product of the curable composition of any one of claims 1 to 14,
wherein the cured product is present adjacent to the heating element.

[Figure 1]

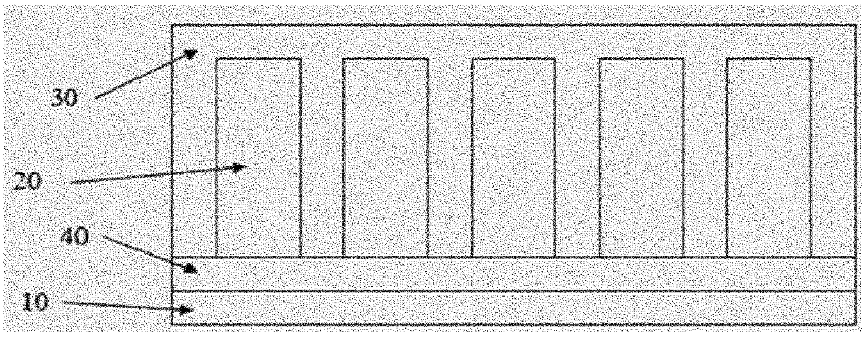


[Figure 2]

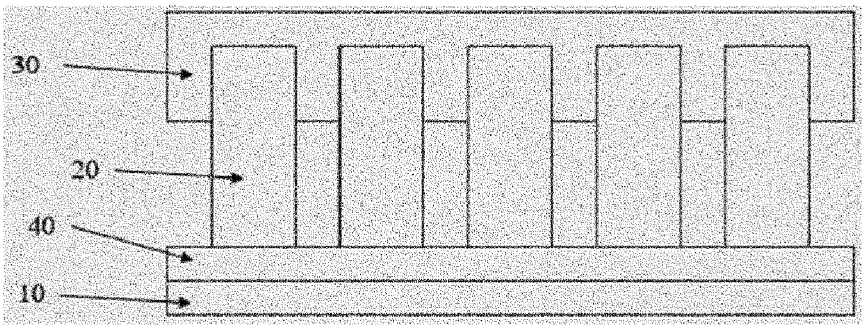

[Figure 3]

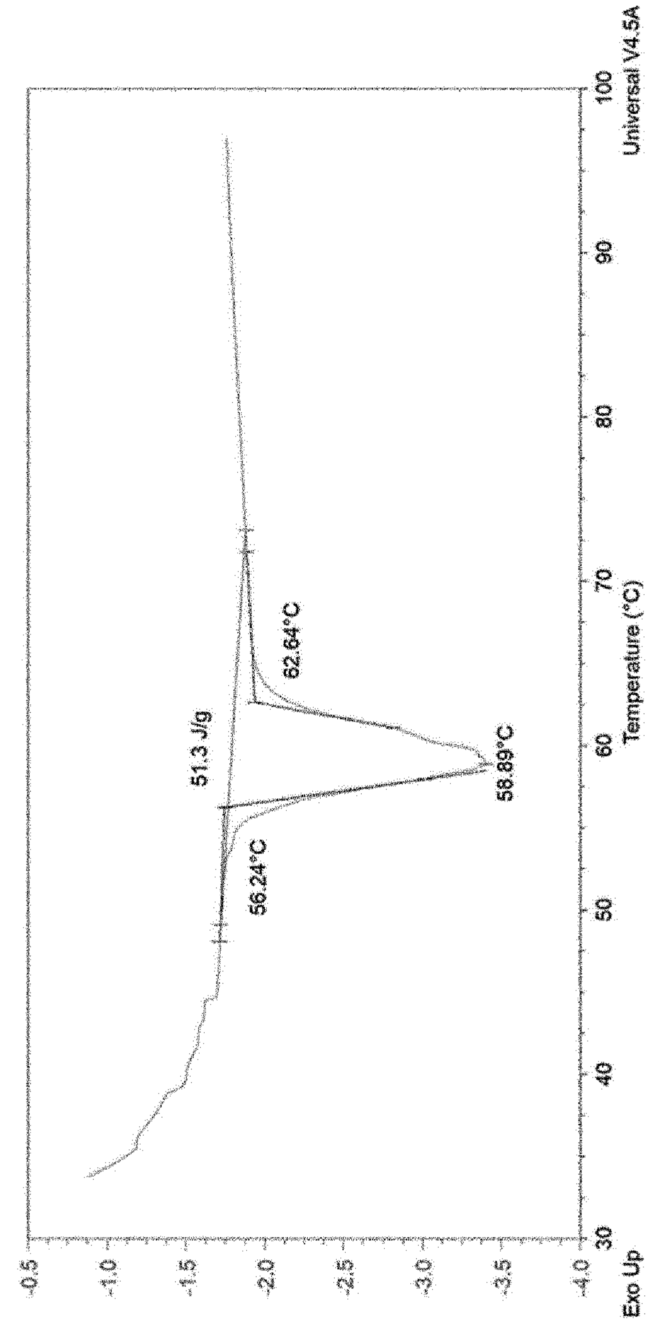
51.3 J/g
62.64°C
58.89°C
56.24°C
Heat Flow (W/g)
Temperature (°C)
Exo Up
Universal V4.5A
-0.5
-1.0
-1.5
-2.0
-2.5
-3.0
-3.5
-4.0
30
40
50
60
70
80
90
100

[Figure 4]

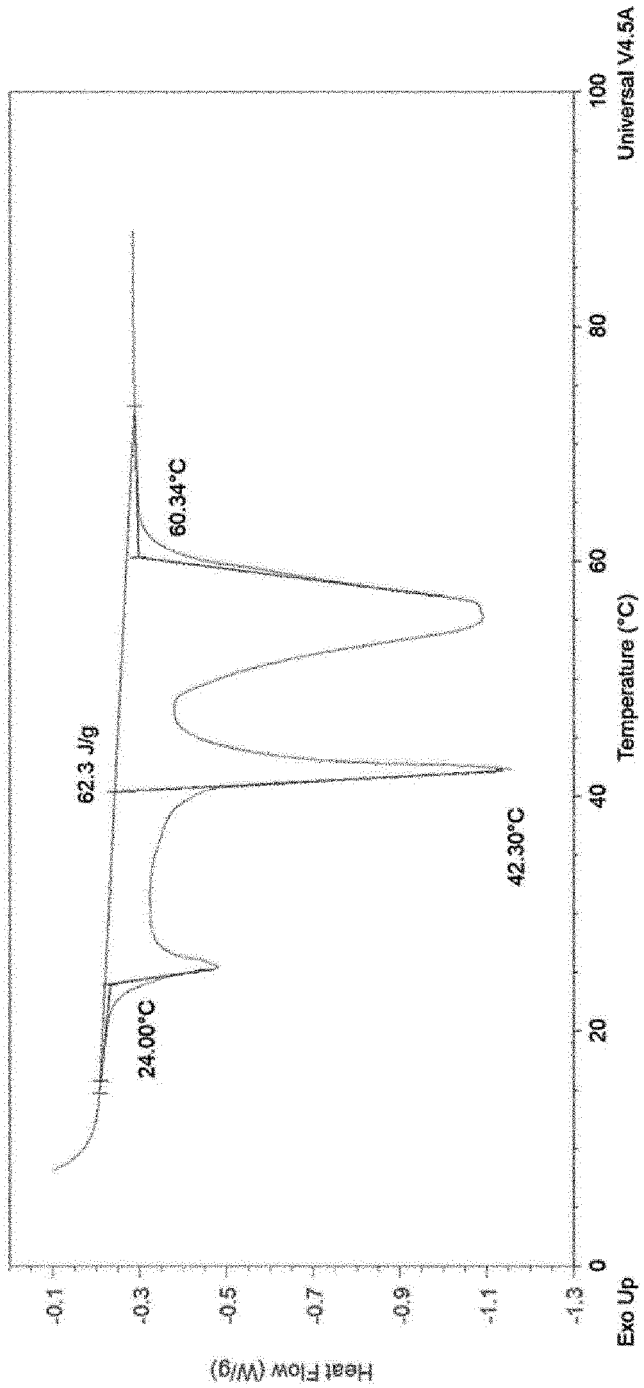
Heat Flow (W/g)
-0.1
-0.3
-0.5
-0.7
-0.9
-1.1
-1.3
Exo Up
0
20
40
60
80
100
Temperature (°C)
Universal V4.5A
24.00°C
42.30°C
62.3 J/g
60.34°C

[Figure 5]

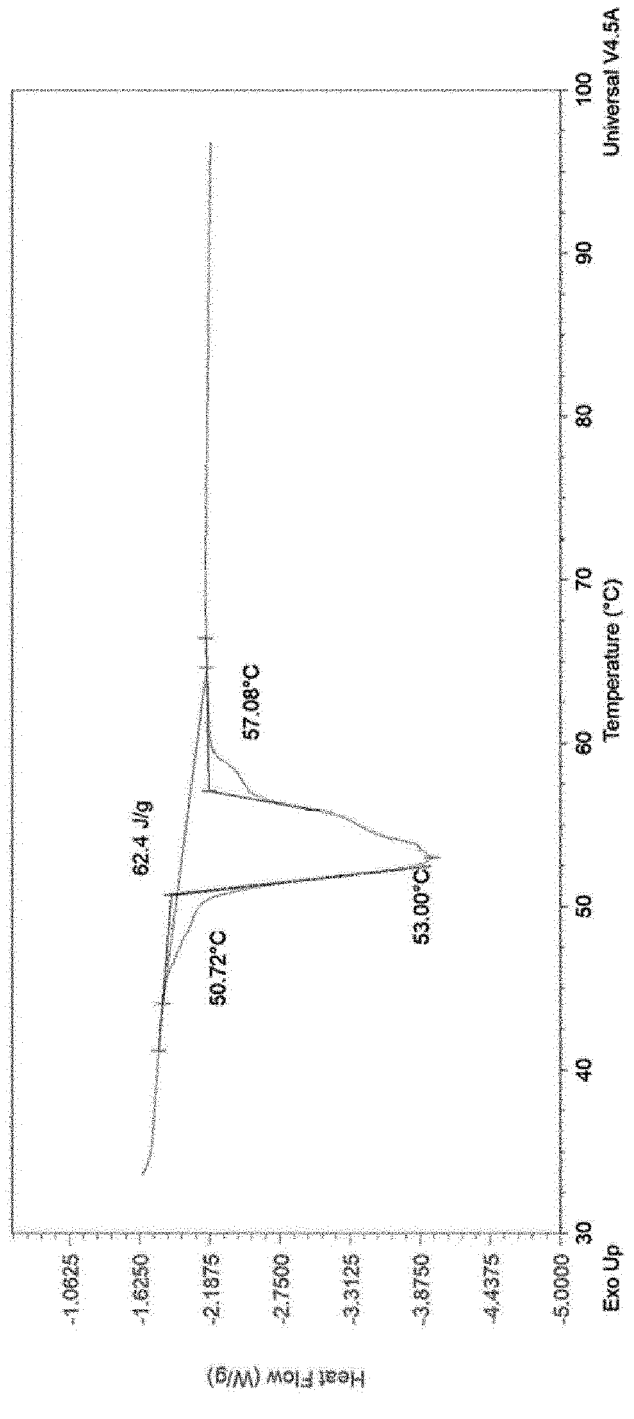
Universal V4.5A
Heat Flow (W/g)
Exo Up
Temperature (°C)
62.4 J/g
57.08°C
50.72°C
53.00°C
-1.0625
-1.6250
-2.1875
-2.7500
-3.3125
-3.8750
-4.4375
-5.0000
30
40
50
60
70
80
90
100

[Figure 6]

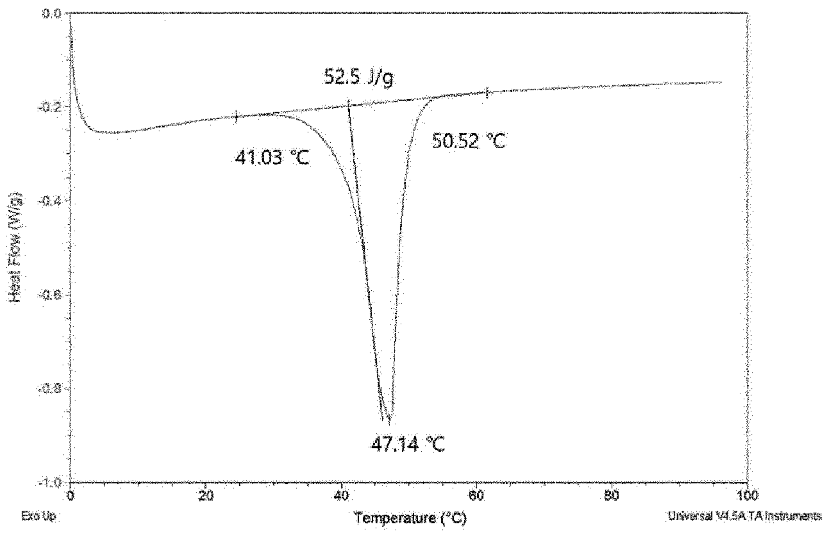
52.5 J/g
41.03 °C
50.52 °C
47.14 °C
Heat Flow (W/g)
Temperature (°C)
Exo Up
Universal V4.5A TA Instruments

[Figure 7]

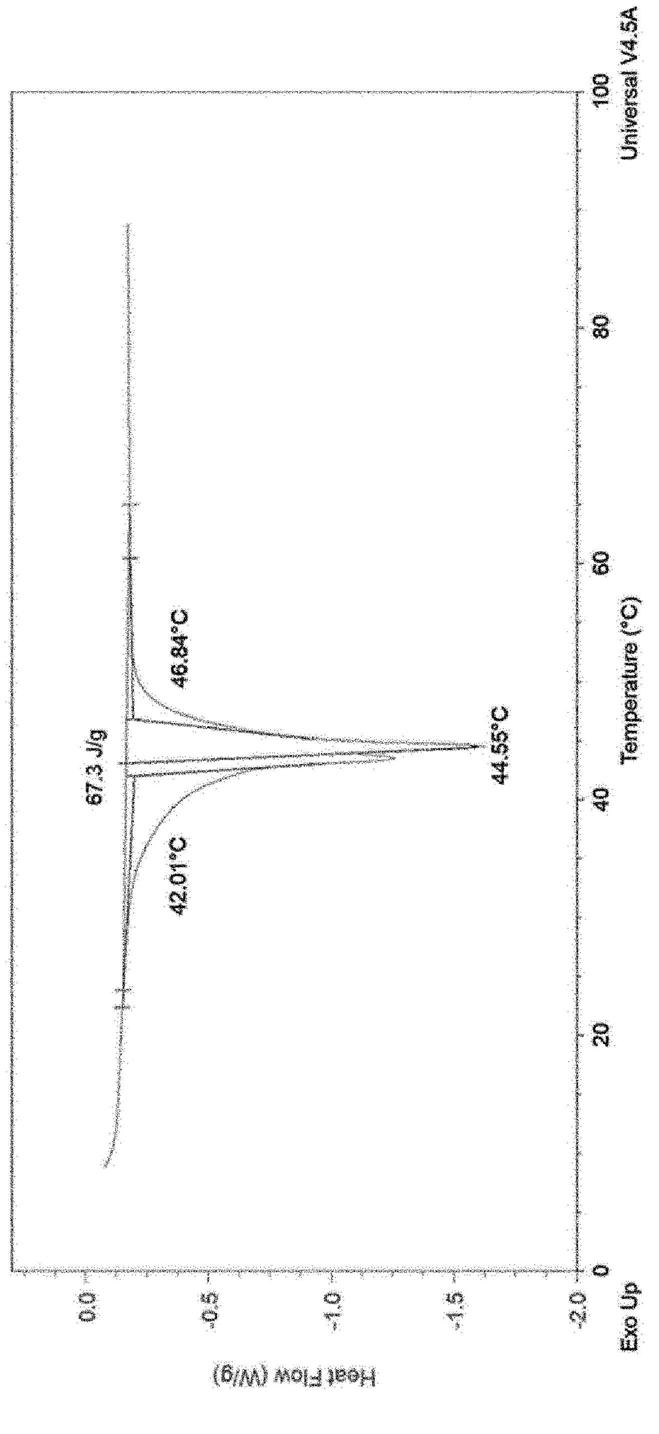
67.3 J/g
46.84°C
42.01°C
44.55°C
Heat Flow (W/g)
Temperature (°C)
Exo Up
Universal V4.5A
0.0
-0.5
-1.0
-1.5
-2.0
0
20
40
60
80
100

[Figure 8]

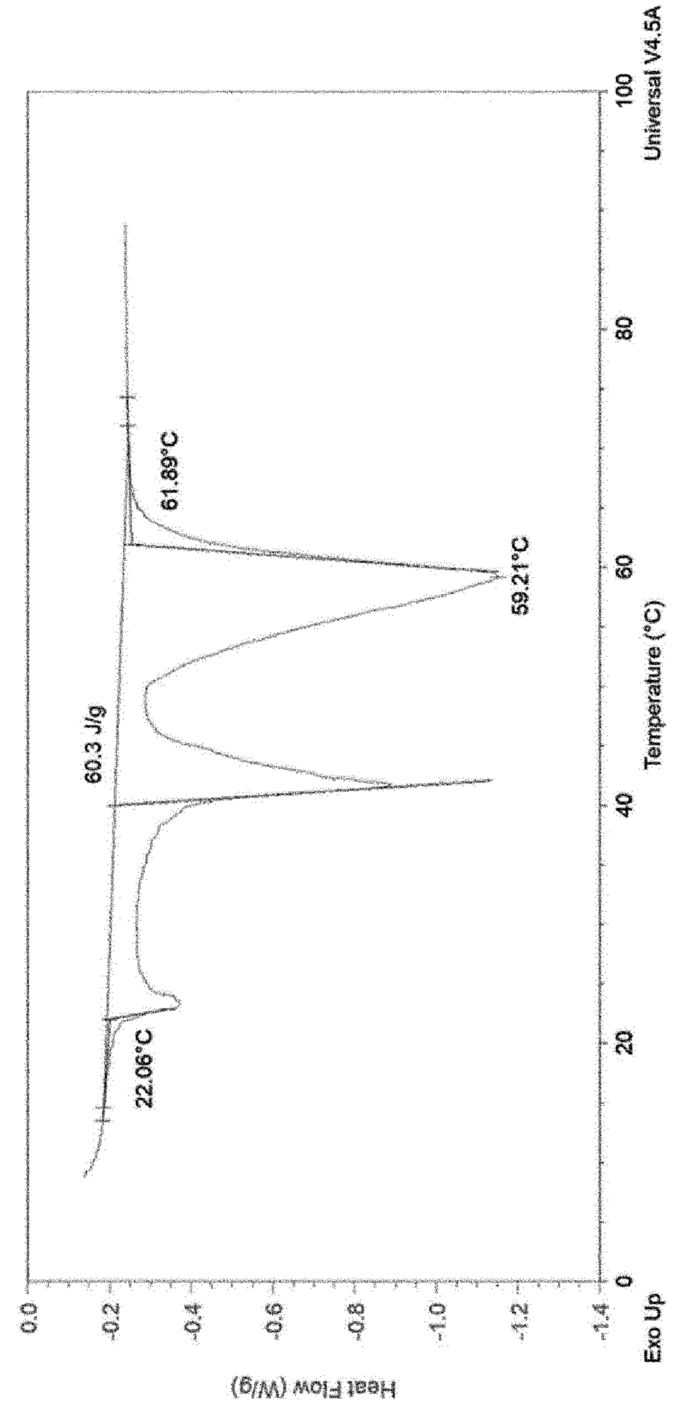

Heat Flow (W/g)
0.0
-0.2
-0.4
-0.6
-0.8
-1.0
-1.2
-1.4
Exo Up
0
20
40
60
80
100
Temperature (°C)
Universal V4.5A
22.06°C
60.3 J/g
59.21°C
61.89°C

[Figure 9]

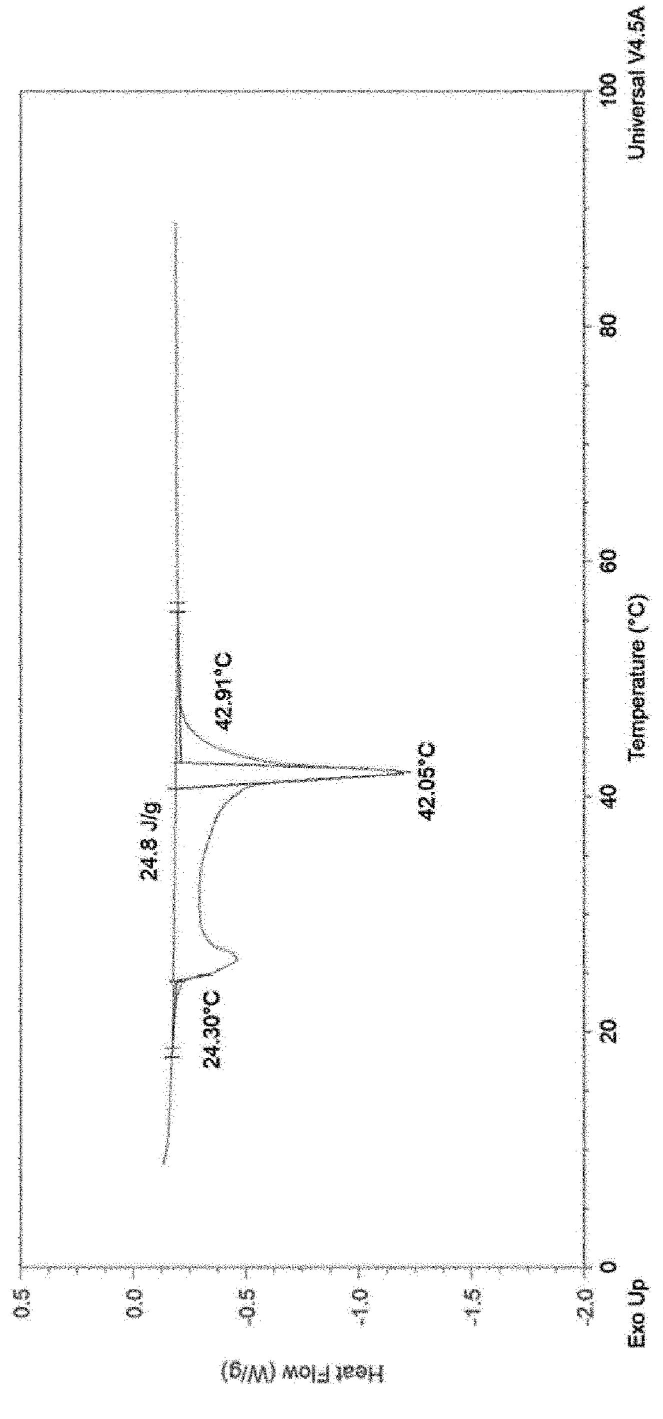
Heat Flow (W/g)
Temperature (°C)
Exo Up
Universal V4.5A
0.5
0.0
-0.5
-1.0
-1.5
-2.0
0
20
40
60
80
100
42.91°C
42.05°C
24.8 J/g
24.30°C

[Figure 10]

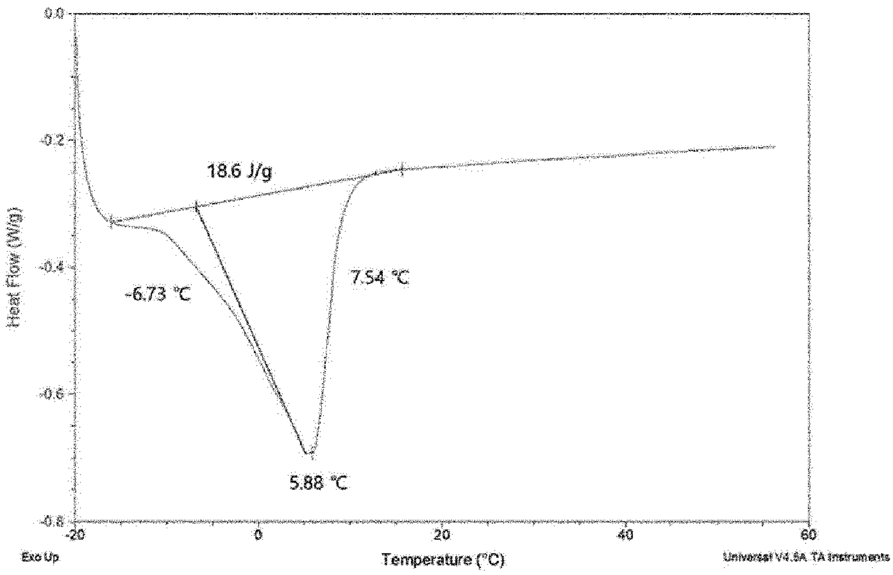
0.0
-0.2
-0.4
-0.6
-0.8
Heat Flow (W/g)
18.6 J/g
-6.73 °C
7.54 °C
5.88 °C
-20
0
20
40
60
Exo Up
Temperature (°C)
Universal V4.5A TA Instruments

| INTERNATIONAL SEARCH REPORT | International application No. **PCT/KR2023/000444** |
|---|---|

**A. CLASSIFICATION OF SUBJECT MATTER**

**C08K 5/053**(2006.01)i; **C08K 5/09**(2006.01)i; **C08K 5/07**(2006.01)i; **C08K 3/22**(2006.01)i; **C08L 83/04**(2006.01)i; **C08G 77/20**(2006.01)i; **C08G 77/12**(2006.01)i; **C08G 77/18**(2006.01)i

According to International Patent Classification (IPC) or to both national classification and IPC

**B. FIELDS SEARCHED**

Minimum documentation searched (classification system followed by classification symbols)

C08K 5/053(2006.01); C08F 220/14(2006.01); C08F 283/06(2006.01); C08J 3/24(2006.01); C08J 9/00(2006.01); C08K 3/00(2006.01); C08L 83/00(2006.01); F28D 20/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상전이 물질(phase change material), 실리콘 수지(silicone resin), 폴리에틸렌 글리콜(polyethylene glycol), 경화체(cured article), 누액율(leakage rate)

**C. DOCUMENTS CONSIDERED TO BE RELEVANT**

| Category* | Citation of document, with indication, where appropriate, of the relevant passages | Relevant to claim No. |
|---|---|---|
| X<br>A | CN 111647116 A (SOUTHWEST UNIVERSITY OF SCIENCE AND TECHNOLOGY) 11 September 2020 (2020-09-11)<br>See paragraphs [0023], [0086] and [0087]; example 1; and figures 10 and 11. | 1,3<br>2 |
| X | KR 10-2017-0029599 A (CHUGOKU MARINE PAINTS, LTD.) 15 March 2017 (2017-03-15)<br>See paragraphs [0134], [0159] and [0163]; claim 1; and table 3. | 2,3 |
| A | KR 10-2014-0013920 A (HUTCHINSON) 05 February 2014 (2014-02-05)<br>See entire document. | 1-3 |
| A | KR 10-2020-0044814 A (ROGERS CORPORATION) 29 April 2020 (2020-04-29)<br>See entire document. | 1-3 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 April 2023** | **27 April 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/000444**

**C. DOCUMENTS CONSIDERED TO BE RELEVANT**

| Category* | Citation of document, with indication, where appropriate, of the relevant passages | Relevant to claim No. |
|---|---|---|
| A | US 2013-0295371 A1 (PETERSON CHEMICAL TECHNOLOGY, INC.) 07 November 2013 (2013-11-07)<br>See entire document. | 1-3 |

**INTERNATIONAL SEARCH REPORT**

International application No.
**PCT/KR2023/000444**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **12, 16, 18**
because they relate to parts of the international application that do not comply with the prescribed requirements to such an extent that no meaningful international search can be carried out, specifically:

Claims 12, 16 and 18 refer to claims violating the manner of referring to multiple dependent claims (PCT Rule 6.4(a)), and thus are unclear.

3. ☑ Claims Nos.: **4-11, 13-15, 17, 19, 20**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2023/000444**

| Patent document cited in search report | Publication date (day/month/year) | Patent family member(s) | Publication date (day/month/year) |
|---|---|---|---|
| CN 111647116 A | 11 September 2020 | CN 111647116 B | 26 January 2021 |
| KR 10-2017-0029599 A | 15 March 2017 | CN 106795265 A | 31 May 2017 |
| | | CN 106795265 B | 14 May 2019 |
| | | EP 3187520 A1 | 05 July 2017 |
| | | EP 3187520 A4 | 25 April 2018 |
| | | EP 3187520 B1 | 24 February 2021 |
| | | JP 6253790 B2 | 27 December 2017 |
| | | KR 10-1876155 B1 | 06 July 2018 |
| | | PH 12017500377 A1 | 17 July 2017 |
| | | WO 2016-031825 A1 | 03 March 2016 |
| KR 10-2014-0013920 A | 05 February 2014 | BR 102013017724 A2 | 10 February 2015 |
| | | CN 103571192 A | 12 February 2014 |
| | | EP 2690141 A1 | 29 January 2014 |
| | | EP 2690141 B1 | 18 October 2017 |
| | | FR 2993894 A1 | 31 January 2014 |
| | | FR 2993894 B1 | 01 August 2014 |
| | | JP 2014-028948 A | 13 February 2014 |
| | | MX 2013008594 A | 24 January 2014 |
| | | US 2014-0030458 A1 | 30 January 2014 |
| | | US 9676941 B2 | 13 June 2017 |
| KR 10-2020-0044814 A | 29 April 2020 | CN 111051464 A | 21 April 2020 |
| | | DE 112018004799 T5 | 18 June 2020 |
| | | GB 2578987 A | 03 June 2020 |
| | | GB 2578987 B | 08 February 2023 |
| | | JP 2020-532609 A | 12 November 2020 |
| | | TW 201912759 A | 01 April 2019 |
| | | US 2020-172783 A1 | 04 June 2020 |
| | | WO 2019-046154 A1 | 07 March 2019 |
| US 2013-0295371 A1 | 07 November 2013 | AU 2015-209541 A1 | 11 August 2016 |
| | | CA 2937238 A1 | 30 July 2015 |
| | | CA 3101495 A1 | 19 December 2019 |
| | | CN 106029764 A | 12 October 2016 |
| | | CN 112437799 A | 02 March 2021 |
| | | EA 201691329 A1 | 30 January 2017 |
| | | EP 2832782 A1 | 04 February 2015 |
| | | EP 2870187 A1 | 13 May 2015 |
| | | EP 2870187 A4 | 02 December 2015 |
| | | EP 2870187 B1 | 20 October 2021 |
| | | EP 2938666 A1 | 04 November 2015 |
| | | EP 2938666 A4 | 29 June 2016 |
| | | EP 3097148 A1 | 30 November 2016 |
| | | EP 3097148 A4 | 30 August 2017 |
| | | EP 3810715 A1 | 28 April 2021 |
| | | EP 3810715 A4 | 09 March 2022 |
| | | US 10113043 B2 | 30 October 2018 |
| | | US 10202499 B2 | 12 February 2019 |
| | | US 10329469 B2 | 25 June 2019 |
| | | US 10344134 B2 | 09 July 2019 |
| | | US 10526518 B2 | 07 January 2020 |
| | | US 10738228 B2 | 11 August 2020 |

Form PCT/ISA/210 (patent family annex) (July 2022)

**INTERNATIONAL SEARCH REPORT**
**Information on patent family members**

International application No.
**PCT/KR2023/000444**

| Patent document cited in search report | Publication date (day/month/year) | Patent family member(s) | Publication date (day/month/year) |
|---|---|---|---|
| | | US 10759919 B2 | 01 September 2020 |
| | | US 2011-0213596 A1 | 01 September 2011 |
| | | US 2013-0296449 A1 | 07 November 2013 |
| | | US 2013-0316164 A1 | 28 November 2013 |
| | | US 2014-0039082 A1 | 06 February 2014 |
| | | US 2014-0141233 A1 | 22 May 2014 |
| | | US 2014-0183403 A1 | 03 July 2014 |
| | | US 2015-0018443 A1 | 15 January 2015 |
| | | US 2015-0166756 A1 | 18 June 2015 |
| | | US 2015-0197610 A1 | 16 July 2015 |
| | | US 2017-0037215 A1 | 09 February 2017 |
| | | US 2017-0073562 A1 | 16 March 2017 |
| | | US 2017-0218156 A1 | 03 August 2017 |
| | | US 2018-0022978 A1 | 25 January 2018 |
| | | US 2018-0298264 A1 | 18 October 2018 |
| | | US 2019-0169390 A1 | 06 June 2019 |
| | | US 2019-0276723 A1 | 12 September 2019 |
| | | US 2020-0140737 A1 | 07 May 2020 |
| | | US 2020-0317978 A1 | 08 October 2020 |
| | | US 2020-0354536 A1 | 12 November 2020 |
| | | US 8433550 B2 | 30 April 2013 |
| | | US 8933139 B1 | 13 January 2015 |
| | | US 8933140 B2 | 13 January 2015 |
| | | US 9080051 B2 | 14 July 2015 |
| | | US 9534098 B2 | 03 January 2017 |
| | | US 9725595 B2 | 08 August 2017 |
| | | WO 2014-008250 A1 | 09 January 2014 |
| | | WO 2014-008259 A1 | 09 January 2014 |
| | | WO 2014-105687 A1 | 03 July 2014 |
| | | WO 2014-105693 A1 | 03 July 2014 |
| | | WO 2015-112542 A1 | 30 July 2015 |
| | | WO 2019-241675 A1 | 19 December 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220003582
- KR 1020200135105